# EUROPEAN PATENT APPLICATION

(11) **EP 4 309 908 A1**
(43) Date of publication of application: **24.01.2024**
(21) Application number: 22186214.7
(22) Date of filing: 21.07.2022
(51) Int. Cl.: B41M 7/00, C09D 11/54

(54) **METHOD AND SET FOR OVERCOATING A PRINTED SUBSTRATE**

(71) Applicant: TIGER Coatings GmbH & Co. KG, 4600 Wels (AT)
(72) Inventor: GNATIUK, Iurii, 4600 Wels (AT); LUMETZBERGER, Christoph, 4600 Wels (AT); HOLZINGER, Dieter, 4600 Wels (AT)
(74) Representative: SONN Patentanwälte GmbH & Co KG

(57) **Abstract**

The present invention provides a method for overcoating a printed substrate, preferably corrugated board, the method comprising the steps of: providing the substrate, wherein the substrate has an area on which at least one ink has been printed, preferably by inkjet printing; and overcoating at least a portion of the area with a coating composition, the composition having a continuous aqueous phase and a solid phase comprising (preferably silica-containing) inorganic nanoparticles dispersed through the continuous aqueous phase, wherein the z-average diameter of the inorganic nanoparticles is 1 nm to 100 nm and the mass fraction of the inorganic nanoparticles within the coating composition is more than 5%. Also provided is a set for printing on and overcoating a substrate comprising a container A comprising an aqueous ink and container B comprising the coating composition as defined above.

## Description

### Field of the present invention

The present application relates to methods for overcoating substrates on which ink has been printed, preferably by inkjet printing.

### Background of the invention

Corrugated board is produced by gluing at least one corrugated paper sheet and one or two flat paper sheets. One could use up to seven paper sheets for the production of corrugated boards (resulting in so-called triple wall corrugated boards). The corrugated board typically features the following most crucial characteristic: light paper is gaining an extraordinary stability/rigidity when fluted and glued together with flat paper sheets, thereby building up a hollow structure. In this way, a stable, lightweight material made of paper for various applications, in particular packaging applications, may be produced.

Nowadays corrugated board is used in different areas as packaging material. Apart from packaging of different commodity goods, primary or secondary packaging belongs to the main usage of corrugated board.

The main part of the used corrugated board for packaging applications requires a decorative appearance, which is typically achieved by applying a decorative print. Most of the corrugated board for packaging applications is decorated by analogue flexographic printing, either in single or in multiple colours. The manufacturing of the printing cylinder, which is required for flexographic printing, is very complex and costly and therefore can be economically justified only at high numbers of the printed parts of the same design. As soon as any change in the printing design is required, new printing cylinders need to be manufactured.

When the number of printed samples is low/reduced, only digital printing is an industrially relevant, alternative printing technique that may be used for different substrates. Among the digital printing techniques, inkjet printing is most commonly used for the decoration of packaging material. In inkjet printing, the printhead(s) may be driven according to an electronical pattern across the substrate or may be fixed above the substrate (which is typically moved through the machine by a conveying system), thereby producing an image on the substrate when passing the printhead(s) once (single pass printing) or repeatedly (multi pass printing).

Inkjet printing is also a common method for applying a print on corrugated board, especially when the so called pre-print technique (the print is applied to a paper sheet before the manufacturing of the corrugated board) and/or the so called post-print technique (the print is applied onto the readymade corrugated board) is used.

A newer method is the integration of a printing unit (typically an inkjet printing unit) into a corrugated board manufacturing machine, which is also called corrugator (see e.g. DE 10 2013 202 871 A1 or WO 2014/128115 A1), or an in-line arrangement of a printing unit (typically an inkjet printing unit) and a corrugator within a corrugated board production line. This method has advantages as compared to the analogue flexography printing in regard of the manufacturing costs and in production flexibility but also has advantages compared to conventional digital printing as pre-print or post-print. However, in-line digital printing in a corrugated board production line requires inks with exceptional requirements, like high frequency jettability, good drying performance, high stability, good wetting performance on a wide range of substrates, high water resistance as well as high abrasion resistance, in particular under heat exposure, to name a few. Heat abrasion resistance is of particular importance, as some parts of the corrugator tend to become hot during operation. This may lead to unacceptable/poor image quality due to abrading and smearing of the print and, even worse, corrugator stoppage due to blockage.

Generally, aqueous inks for inkjet printing are known in the art. These are widely used in home and office applications. Typically for the previously mentioned applications, the aqueous inks are being printed with, so-called, bubble-jet print-heads. Here the ink is ejected from fine nozzles by local heating up of the ink up to vaporisation to create a bubble that presses an ink drop out of the nozzles. For industrial applications almost only piezo print-heads are used, where fine droplets are ejected from the nozzles by the deformation of piezo crystals.

When printed onto non-coated, highly absorbing paper substrate (such as non-coated corrugated board), many inks have poor optical properties due to the extensive ink penetration into the paper fibers. In order to improve the ink optical properties, different paper coatings were proposed in the prior art to aggregate ink drops at the paper outer surface. However, this typically leads to ink accumulation on the upper surface of the aggregation coating and poor binding of the ink to the paper fibers. As a consequence, in-line processing in the corrugator is hampered, as the coloured ink and aggregation coating tend to be abraded or smeared by hot corrugator parts (e.g. hot plates) causing print quality deterioration and even abrupt stoppage of the corrugator line. Accordingly, inks with improved heat abrasion resistance are particularly suitable for this field of use.

Such an ink with improved heat abrasion resistance is disclosed in WO 2021/105441 A1. Specifically, that document relates to an aqueous ink comprising one or more film forming agents, wherein the total film forming agent concentration in the aqueous ink is from 0.1 wt.% to 30 wt.%, and optionally one or more emulsifiers. The one or more emulsifiers, if present, are fatty acid esters of polyalkoxylated sorbitan and/or the one or more film forming agents fulfil at least one of the following properties: a Young modulus of at least 2 GPa, and a nano hardness of at least 0.08 GPa. This ink may be used for inkjet printing, preferably on a corrugated board or on a liner for the production of corrugated board. The liner is to be understood as the outer (either upper or bottom) paper layer in the corrugated board.

Entirely unrelated to improving heat abrasion resistance (in particular in the context of corrugated board or corrugators), several coating compositions for printed materials were disclosed in the prior art:
EP 1 016 534 B1 describes a method of extending the color gamut of a colored printing ink in a printing process. The method uses an additional ink material to lighten or darken the chroma of an underlying colored ink thereby extending the color gamut of the underlying ink. Color gamut extending inks are typically liquid ink compositions which are selected from light scattering agents, blending agents or inks and opaque agents or inks. Various types of light scattering agents may be used, including, but not limited to, aqueous/glycol ink compositions, phase change waxes, gelatins, and other translucent inks and toners. Specific examples include, but are not limited to, latexes and fumed silica.

EP 1 155 870 B1 discloses a clear fixer fluid for fixing printed ink printed on a print medium in an ink jet printer to improve the water fastness of the said printed ink and said printed ink comprising an ink composition that would precipitate or flocculate at a pH of 6 or less, said fixer fluid comprising at least one acid selected from the group consisting of organic acids and ortho-phosphoric acid, and a salt of at least one polymeric acid.

EP 2 449 039 B1 describes ink-jet overcoats including latex polymers and inorganic nano particles for printing durable images. The composite latex particulate comprises inorganic nanoparticles at least partially encapsulated by a polymer, said inorganic particulates selected from the group consisting of silica, titania, alumina, zinc oxide, silicates, oxides of indium and tin, and combinations thereof, wherein the polymer comprises polymerized monomers including a hydrophobic monomer and an acid containing monomer, the acid containing monomer being present at from 0.1 wt.% to 20 wt.% of the polymerized monomers. The composite latex particulate comprises 1 wt.% to 70 wt.% inorganic nanoparticles, and the overcoat composition when printed is transparent or translucent.

US 7 744 206 B2 discloses a process for providing an ozone resistant dye-based image, and a resulting image, which includes jetting an ink containing the dye onto a microporous media surface to form a dye-based image, and thereafter jetting over at least a portion of the dye-based image a clear ink overcoat including a transparent polymeric binder containing dispersed inorganic nano particles, wherein the median equivalent circular diameter of all of the dispersed inorganic particles is in the range of 1 to 500 nm. Color fade due to ozone effects is disclosed to be diminished while maintaining jettability.

WO 2021/112816 A1 discloses an inkjet overcoat composition including an aqueous vehicle and modified silica nanoparticles dispersed in the aqueous vehicle and a sugar alcohol dissolved or dispersed in the aqueous vehicle. Each modified silica nanoparticle includes a silica core and a hydrotropic silane coupling agent attached to the silica core. The prints of the green and blue inks overprinted with aforementioned composition are disclosed to exhibit improved scratch resistance and durability compared to comparative overcoat without modified silica nanoparticles.

Reverting to the topic of inks themselves, despite efforts in the prior art to provide inkjet inks with higher heat abrasion resistance, further improvement of heat abrasion resistance of inks in print applications is still desirable, especially in the demanding setting of printing in a corrugator or within a corrugated board production line.

### Summary of the invention

The present invention provides a method for overcoating a printed substrate. In particular, the substrate is a corrugated board or a liner for the production of corrugated board. The inventive method comprises the steps of providing the substrate, wherein the substrate has an area on which at least one ink (preferably an aqueous ink, yet preferably an aqueous ink as further defined herein) has been printed (preferably by inkjet printing) and preferably at least partially dried and/or cured; and overcoating at least a portion of the area with a coating composition, the composition having a continuous aqueous phase and a (colloidal) solid phase comprising inorganic nanoparticles (preferably substantially homogenously) dispersed through the continuous aqueous phase. The z-average diameter (or z-average size, or D_{z}) of the inorganic nanoparticles (i.e. the z-average diameter of the entirety of the inorganic nanoparticles in the composition) is 1 nm to 100 nm, preferably 1 nm to 50 nm, more preferably 1 nm to 20 nm, yet even more preferably 1 nm to 15, especially 1 nm to 10 nm (as determined by dynamic light scattering (DLS), in particular according to ISO 22412:2017). The mass fraction (i.e. weight%, with respect to the total weight of the coating composition) of the inorganic nanoparticles within the coating composition is more than 5%, preferably more than 10%, more preferably at least 10.5%, yet more preferably more than 11%, even more preferably more than 11.5%, yet even more preferably more than 12% or even more than 13%, especially more than 14% or even more than 15%. (But preferably, the mass fraction is at most 30%, preferably at most 25%, more preferably at most 20%, especially at most 16%).

Typically, the inventive method further comprises the step of drying and/or curing the overcoating composition on the portion after the overcoating step, wherein the drying is preferably performed at a substrate surface temperature of at least 80°C, more preferably at least 90°C and even more preferably at least 100°C for at least 1 second (particularly for the time interval necessary to achieve this surface temperature).

Preferably, the overcoating (and optionally the drying or curing) are performed in a corrugator or within a corrugated board production line, preferably wherein said steps occur in-line. The overcoating can be applied digitally (e.g. by a digital printing method such as inkjet printing) or analogously (e.g.: by roll-coating, brush-coating or spray-coating).

In a preferred embodiment of the inventive method, said providing of the substrate comprises printing at least one ink (preferably by inkjet printing) on an area of the substrate, whereby the area on which at least one ink has been printed is obtained. The printing is preferably followed by at least partially drying and/or curing the ink printed on the area. Preferably, the printing and the overcoating (and optionally the drying and/or curing) are performed in a corrugator or within a corrugated board production line, preferably wherein said steps occur in-line. In a further aspect, the invention provides the use of the coating composition as defined herein to increase the heat abrasion resistance of a printed area of a substrate (as defined herein), wherein at least one ink has been printed on the area, preferably by inkjet printing; preferably wherein the ink is an aqueous ink, particularly preferably the aqueous ink as defined herein. Preferably, the use is in a corrugator or within a corrugated board production line, preferably in-line.

In yet another aspect, the present invention provides a set (or kit or kit-of-parts) for printing on and overcoating a substrate. In particular, the substrate is a corrugated board or a liner for the production of corrugated board. The inventive set comprises at least a (closed) container A comprising an aqueous ink, preferably as further defined herein. This set further comprises at least a (closed) container B comprising the coating composition as defined herein.

The at least one ink used in the inventive method (which may be an aqueous ink, especially an aqueous inkjet ink) or the aqueous (inkjet) ink of the inventive set (typically comprising an aqueous pigment concentrate and a pigment concentrate carrying liquid) preferably comprises one or more film forming agents, wherein the total film forming agent concentration in the aqueous ink is from 0.1 to 30 wt.% (in particular 0.1 to 10 wt.%), and optionally one or more emulsifiers, preferably wherein the total emulsifier concentration in the aqueous ink is from 0.1 to 10 wt.%. Preferably, the one or more film forming agents fulfil at least one of the following properties: i) a Young modulus of at least 2 GPa (more preferably at least 3 GPa), and ii) a nano hardness of at least 0.08 GPa (preferably at least 0.1 GPa); and/or the one or more emulsifiers, if present, are preferably fatty acid esters of polyalkoxylated sorbitan. Such inks have turned out to be particular suitable for use together with the coating composition to achieve an object (or beneficial effects) of the present invention (see also below).

The aqueous pigment concentrate typically present in the (aqueous) ink preferably comprises one or more pigments, preferably wherein the total pigment concentration in the aqueous pigment concentrate is from 5 weight% to 40 weight% (preferably from 10 to 30 wt.% and more preferably from 10 to 20 wt.% and even more preferably from 12 to 18 wt.%), one or more pigment dispersing agents, preferably wherein the total pigment dispersing agent concentration in the aqueous pigment concentrate is from 0.5 weight% to 10 (or 5) weight% (preferably from 0.75 to 4.5 wt.%, and more preferably from 1.0 to 4.2 wt.%), preferably one or more non-ionic surfactants with a hydrophilic-lipophilic balance (HLB) value of at least 12 (preferably at least 15 and more preferably at least 17), preferably wherein the total concentration of non-ionic surfactants with a HLB value of at least 12 (preferably at least 15 and more preferably at least 17) in the aqueous pigment concentrate is from 0.1 weight% to 10 weight% (preferably from 0.2 to 7 wt.% and more preferably from 1 to 6 wt.%), and water as balance (i.e. to add up to a total of 100 weight%). Of course, other components (such as pigment wetting agents) may be present in the concentrate. However, the inks used in the present invention may also be manufactured by using other, in particular commercially available, pigment concentrates.

The ink most typically comprises an (aqueous) concentrate carrying liquid. Usually, the concentration of the pigment concentrate in the aqueous ink is from 5 to 50 wt.%, preferably from 10 to 30 wt.% and/or the concentration of the pigment concentrate carrying liquid is 50 to 95 wt.%, preferably 70 to 90 wt.%, with the balance being water.

The ink (further) comprises (e.g. in a concentrate carrying liquid) one or more film forming agents, preferably wherein the total film forming agent concentration in the aqueous ink is from 0.1 to 30 wt.% (preferably from 0.1 to 20 wt.%, more preferably from 0.1 to 10 wt.%, even more preferably from 0.25 to 7 wt.% and yet more preferably from 0.5 to 5.5 wt.%), and optionally one or more emulsifiers, preferably wherein the total emulsifier concentration in the aqueous ink is from 0.1 to 10 wt.% (preferably from 0.5 to 7 wt% and more preferably from 1 to 5 wt%). The one or more film forming agents preferably fulfil at least one (preferably both) of the following properties: i) a Young modulus of at least 2 GPa, and/or ii) a nano hardness of at least 0.08 GPa; and/or the one or more emulsifiers, if present, are preferably fatty acid esters of polyalkoxylated sorbitan. Surprisingly it has been found by the inventors that the coating composition used herein is particularly suitable for coating various printed substrates, in particular absorbing substrates, such as paper, coated paper, liner for the production of corrugated board or corrugated board and that the coating composition is even suitable for inline printing applications in a corrugator or within the corrugated board production line. It surprisingly turned out that the inventive overcoating method leads to high heat abrasion resistance of prints, in particular inkjet prints. This was observed at elevated temperatures (> 25 °C), especially in environmental conditions typical for corrugators or corrugated board production lines, for example at above 80°C, such as 120-140°C. The coating compositions used in the present invention can comprise a reduced amount of volatile organic compounds (VOCs), such as glycols, polyols and/or glycol ethers and the like, resulting in reduced VOC emissions, in particular upon drying, surprisingly while retaining other advantageous properties such as described above or in the following.

### Detailed description of the invention

The method of the present invention is suitable for many substrates. Preferably, the substrate is absorbing or porous, such as paper, cardboard, cellulose-based substrates, synthetic fibers and the like. The substrate may be coated or non-coated. The substrate may also be non-coated paper having a primer layer (as printable or printed surface area).

According to a particular preference, the substrate is a corrugated board or a liner for the production of corrugated board.

In another preferred embodiment, the overcoating comprises printing, preferably inkjet printing (e.g. as further disclosed herein), the coating composition onto said portion of the area.

Particularly satisfying results, especially in connection with corrugated board production, are obtained when the melting point of the inorganic nanoparticles in the coating composition at 1 atm is above 500°C, preferably above 750°C, more preferably above 1000°C, even more preferably above 1250°C, especially above 1500°C.

According to a preferred embodiment, the inorganic nanoparticles comprise (or consist of) a metal (in particular a transition metal, alkali metal or earth alkali metal), metal salt and/or a metal oxide. The "metal" of the metal salt or the metal oxide is preferably a transition metal, alkali metal or alkaline earth metal. Typically, the inorganic nanoparticles comprise at least 50 wt%, preferably at least 60 wt%, more preferably at least 70 wt%, even more preferably at least 80 wt%, yet even more preferably at least 90 wt%, especially at least 95 wt% or even at least 99 wt% metals, metal salts, metal oxides or mixtures thereof.

In a particular preference, the metal of the metal salt is selected from silicon, calcium, magnesium, aluminum, and combinations thereof. The metal salt is preferably a (substantially water-insoluble) carbonate, phosphate, sulfate, borate or chloride.

For particularly satisfying results, especially with regard to high heat abrasion resistance, the inorganic nanoparticles preferably comprise (or consist of) a metal oxide wherein the metal of the metal oxide is selected from the group consisting of aluminum, calcium, magnesium, titanium, zirconium, zinc, silicon and combinations thereof. Preferably, the inorganic nanoparticles comprise at least 50 wt%, preferably at least 60 wt%, more preferably at least 70 wt%, even more preferably at least 80 wt%, yet even more preferably at least 90 wt%, especially at least 95 wt% or even at least 99 wt% of such metal oxides.

Silica (SiO₂), alumina (Al₂O₃) and hydroxyapatite turned out to be particularly suitable materials for the inorganic nanoparticles. Accordingly, in another preferred embodiment, the inorganic nanoparticles comprise (or consist of) silica, alumina and/or hydroxyapatite, preferably silica. Preferably, the inorganic nanoparticles comprise at least 50 wt%, preferably at least 60 wt%, more preferably at least 70 wt%, even more preferably at least 80 wt%, yet even more preferably at least 90 wt%, especially at least 95 wt% or even at least 99 wt% silica, alumina and/or hydroxyapatite, preferably silica.

The inorganic nanoparticles may be surface-modified by methods known in the art. For example, the inorganic nanoparticles, in particular silica, may be surface-modified by silanes, preferably epoxy silanes. The (colloidal) solid phase of the coating composition may also comprise other solid components which are preferably substantially homogenously dispersed through the continuous aqueous phase.

Adding particles of a wax or thermoplastic material turned out to be especially beneficial. Consequently, in another preferred embodiment, the coating composition further comprises a wax or a thermoplastic material dispersed through the continuous aqueous phase. It is preferred that the wax or thermoplastic material has a melting temperature ranging from 40°C to 250°C. Alternatively, or in addition thereto, the wax or thermoplastic material is preferably selected from the group consisting of a beeswax, a carnauba wax, a candelilla wax, a montan wax, a Fischer-Tropsch wax, a polyethylene-based wax, a high density polyethylene-based wax, a polybutene-based wax, a paraffin-based wax, a polytetrafluoroethylene-based material, a polyamide-based material, a polypropylene-based wax, and combinations thereof. The addition of particles of a wax or thermoplastic material may lead to increased slip- and abrasion-resistance properties of the coating composition during processing in the corrugator. These beneficial effects are believed to be caused - without being bound to any particular theory - by the migration of the wax or thermoplastic material to the surface of the coating, thereby acting as a physical spacer by protruding above the coating composition surface, preventing another surface from coming into close contact. Once at the surface the wax or thermoplastic material reduce the coefficient of friction of the film. This mechanism is especially characteristic for hard and high melting point waxes.

Typically, the coating composition comprises more than 30 wt.% water, preferably more than 40 wt% water, more preferably more than 50 wt% water, even more preferably more than 60 wt.% water, especially more than 70 wt% water and most preferably more than 80 wt% water with respect to the total weight of the coating composition (i.e. including the solid phase). In addition to water, the aqueous phase may comprise other (water-miscible) solvents (typically at low concentrations, e.g. below 20 wt%, below 10 wt%, below 5 wt% or even below 1 wt% with respect to the total weight of the coating composition, i.e. including the solid phase).

According to a preferred embodiment, the aqueous phase of the coating composition comprises a humectant, preferably selected from monoalcohols, polyols, glycols, ethers thereof, urea, modified urea and combinations thereof, more preferably selected from modified urea (such as BYKETOL PC, BYK, Germany). Other exemplary humectants are ethanol, isopropanol, propanol, ethylene glycol, diethylene glycol, 1,2-propylene glycol, di- and tripropylene glycol, triethylene glycol, tetraethylene glycol, polyethylene glycol, 1,3-propylene glycol, 1,3-butylene glycol, 1,4-butylene glycol, 1,5-pentanediol, 1,2-hexanediol, glycerol and mixtures and/or ethers thereof. By the addition of a humectant, drying out and caking of the coating composition can be prevented.

It was surprisingly found that the combination of inorganic nanoparticles as described herein and humectant(s) in a coating composition is particularly advantageous in terms of forming a continuous coating film on the printed substrate.

In another preferred embodiment, the aqueous phase of the coating composition comprises one or more surfactants. Preferably, these surfactants are present in a concentration range from 0.05 wt.% to 5 wt.% (more preferably from 0.1 to 2 wt% even more preferably from 0.1 to 1.5 wt.%, yet more preferably from 0.2 to 1 wt.%, and most preferably from 0.2 to 0.5 wt%) with respect to the total weight of the coating composition.

Preferably, the surfactant is selected from the group consisting of
- (poly)siloxane surfactants, more preferably polyether-modified (poly)siloxane - surfactants, in particular polyethoxylated poly(siloxane) surfactants;
- alcohol alkoxylate surfactants;
- surfactants with an HLB value of at least 7, preferably at least 10, more preferably at least 12;
- copolymers of polypropylene and polyethylene oxide,
- 2,4,7,9-tetramethyl-4,7-decanediol,
- ethoxylated 2,4,7,9-tetramethyl-5-decyn-4,7-diol,
- ethoxylated fluorosurfactant,
- octylphenolethoxylate - based compounds and/or derivatives thereof,
and mixtures thereof.

As particularly convincing results were obtained with (poly)siloxane surfactants, in another preferred embodiment, the surfactant is selected from (poly)siloxane surfactants, more preferably polyether-modified (poly)siloxane -surfactants, in particular polyethoxylated poly(siloxane) surfactants.

Further suitable surfactants are also disclosed below, e.g. in the section titled Surfactant.

According to a further preferred embodiment, the overcoat obtained by the overcoating has a mean thickness from 0.5 µm to 20 µm, preferably from 1 µm to 15 µm. In another preferred embodiment, the total amount of applied overcoating composition is from 0.5 to 50 g/m², more preferably from 1 to 30 g/m² and even more preferably from 1 to 20 g/m² and most preferably from 5 to 15 g/m² (such as 6 or 7 or 8, or 9, or 10 or 11, or 12, or 13, or 14 g/m²). With substrates and inks tested in the course of the present invention, fulfilment of at least one of these properties turned out to be especially beneficial for increasing heat abrasion resistance, while excellent optical properties (of the print) could still be observed.

Evidently, the overcoat obtained by the overcoating (in particular in respect to its thickness) is typically such that the print in the entire area is still visible (to the naked eye). In other words, the overcoat obtained by the overcoating is typically such that the at least one ink printed on the area is still visible, for the entirety of the area.

In a further preferred embodiment, the coating composition comprises less than 3 wt% film forming agents (and preferably is free of film forming agents), in particular film forming agents as disclosed herein.

An aqueous pigment concentrate, in particular as described herein, is preferably used to manufacture the ink used in the present invention or provided with the inventive set. The ink is preferably an aqueous inkjet ink (for inkjet printing applications), in particular for (industrial) inkjet printing onto different substrates such as various paper types (coated, non-coated), liner for the production of corrugated boards or corrugated boards.

In preferred embodiments, the inventive method or set is suitable for (industrial) in-line inkjet printing and coating in a corrugator - the machine for the production of corrugated boards - and/or for printing and coating in an in-line arrangement of an inkjet printing unit and a corrugator. A short description of the corrugated board production in the corrugator can be found at the webpage of the European Federation of Corrugated Board Manufacturers (FEFCO) under the following link: http://www.fefco.org/lca/dscription-of-production-system/corrugated-board-production. Of course, the inventive methods, uses and sets described herein may also be used for off-line printing applications on corrugated board and/or within corrugated board production lines.

In a particularly preferred embodiment, the overcoating is performed in a corrugator or within a corrugated board production line, preferably wherein said overcoating occurs in-line.

Further, the inventive method or set may also be used for other (digital) printing applications (and subsequent coating), in particular any single-pass or multi-pass inkjet printing process for printing on various, preferably absorbing or porous, substrates, like paper, cardboard, cellulose-based substrates, synthetic fibers and the like.

According to a particularly preferred embodiment of the inventive method, use or set, the at least one ink comprises an aqueous ink, preferably an aqueous inkjet ink, especially a cyan (C) inkjet ink, a magenta (M) inkjet ink, a yellow (Y) inkjet ink and/or a black (K) inkjet ink.

Within the context of the present invention, aqueous inks are defined as inks comprising more than 30 wt.% of water, preferably more than 60 wt.% of water with respect to the total weight of the aqueous ink.

It is particularly advantageous if the (aqueous) ink of the inventive method (the "at least one ink" printed on the area of the substrate) or of the inventive set (e.g. provided in container A1, A2, A3 and/or A4) has a viscosity of more than 3 mPa s, preferably from 3 to 20 mPa s, more preferably from 3.5 to 10 mPa s and even more preferably from 3.5 to 6 mPa s measured at 35 °C and 1 atm.

In another preferred embodiment, the ink has a viscosity of more than 4 mPa s, preferably from 4 to 15 mPa s and more preferably from 5 to 10 mPa s and even more preferably from 5 to 6 mPa s measured at 35°C and 1 atm.

In a further preferred embodiment, the ink has a static surface tension from 21 to 45 mN/m, more preferably from 23 to 30 mN/m and even more preferably from 25 to 29 mN/m measured at 25°C and/or a dynamic surface tension from 30 mN/m to 60 mN/m, more preferably from 35 mN/m to 59 mN/m and most preferably from 40 mN/m to 58 mN/m measured at 25 °C at a frequency of 10 Hz.

In a preferred embodiment, the ratio of the total non-ionic surfactant concentration to the total pigment dispersing agent concentration (in the pigment concentrate) is from 0.1 to 5, preferably 0.5 to 4.0, more preferably 1.0 to 3.0. The ratio from 0.5 to 4.0 is particularly advantageous because when the ratio of said total non-ionic surfactant concentration to said total pigment dispersing agent concentration is below 0.5, the pigment concentrate viscosity is higher and the pigment concentrate becomes less stable; or in other words, the viscosity of the pigment concentrate at least doubles, or even triples within a week of storage at elevated temperature (e.g. 60°C) and therefore is less suitable for certain inkjet applications, in particular for corrugated-board-related applications as described herein. In turn, when the ratio of said total non-ionic surfactant concentration to said total pigment dispersing agent concentration is above 4.0, the open-time/start-up behaviour of an ink based on said pigment concentrate is less suitable for certain inkjet applications, in particular for corrugated-board-related applications as described herein.

In yet a further preferred embodiment, the ratio of said total non-ionic surfactant concentration to said total pigment dispersing agent concentration (in the pigment concentrate) is from 0.5 to 2.5, yet more preferably 0.5 to 2.0, even more preferably 0.8 to 2.5, yet even more preferably 0.8 to 2.0, more preferably 1.5 to 2.0 and even more preferably 1.7 to 2.0.

In a particularly preferred embodiment, the ratio of said total non-ionic surfactant concentration to said total pigment dispersing agent concentration (in the pigment concentrate) is at least 0.5, preferably at least 0.8, more preferably at least 1, more preferably at least 1.5 and more preferably at least 1.7.

In a further preference, the ratio of the sum of said total non-ionic surfactant concentration and said total pigment dispersing agent concentration to said total pigment concentration (in the pigment concentrate) is from 0.10 to 0.80, preferably from 0.25 to 0.65, more preferably from 0.25 to 0.50, and most preferably from 0.25 to 0.40

In a particularly preferred embodiment, the ratio of the sum of said total non-ionic surfactant concentration and said total pigment dispersing agent concentration to said total pigment concentration (in the pigment concentrate) is at least 0.10 and more preferably at least 0.25.

In another embodiment, the one or more pigment dispersing agents (of the pigment concentrate) comprise (preferably consist of) at least one organic resin or polymer or oligomer, the organic resin or polymer or oligomer having pigment affine groups and/or a weight average molecular weight Mw from 3000 Da to 70000 Da. In particular, the pigment affine groups may be acid groups and/or the resin or polymer or oligomer has an acid value in the range of 5 to 300 mgKOH/g, most preferably in the range of 5 to 250 mgKOH/g.

In yet another embodiment, the one or more pigment dispersing agents (of the pigment concentrate) comprise (preferably consist of) at least one pigment dispersing agent with a glass transition temperature Tg of 20 to 170°C or with a glass transition temperature Tg of at least 60 °C, preferably at least 70 °C and more preferably at least 80°C. This pigment dispersing agent is preferably the organic resin or polymer or oligomer mentioned above.

In a further preferred embodiment, the Tg of at least one of the said pigment dispersing agents (of the pigment concentrate) is at least 20°C, preferably at least 70°C, more preferably at least 80°C, yet more preferably at least 90 °C and most preferably at least 100 °C.

In another preference, the one or more pigments (of the pigment concentrate) comprise (preferably consist of) at least one organic pigment. In a further preference, the pigment concentrate further comprises one or more pigment wetting agents, preferably wherein the total pigment wetting agent concentration in the aqueous pigment concentrate is from 3 to 15 wt.%.

According to an embodiment, the aqueous ink (e.g. the pigment concentrate carrying liquid) further comprises one or more polyols (i.e. polyfunctional alcohols) with at least 2 hydroxyl groups and/or one or more glycol ethers, wherein their total concentration in the aqueous ink is from 0.1 to 30 wt.%, preferably 0.1 to 20 wt%, more preferably 1 to 10 wt%, more preferably 1 to 8 wt%, even more preferably 1 to 5 wt% and most preferably from 1.5 to 3 wt%.

In another preferred embodiment the aqueous ink (e.g. the pigment concentrate carrying liquid) further comprises one or more polyols (i.e. polyfunctional alcohols) with at least 2 hydroxyl groups and/or one or more glycol ethers, wherein their total concentration in the aqueous ink is from 3 to 7 wt%, more preferably 3 to 6 wt%, and most preferably 4 to 6 wt%.; e.g. 3.1 to 5.8 wt%.

In yet another preferred embodiment, the one or more film forming agents of the ink comprise (preferably consist of) one or more film forming agents selected from polyurethanes, polyacrylates, in particular polystyrene-(meth)acrylates or polystyrene (meth)acrylic copolymers, polyesters, polyamide-polyurethanes copolymers, polyurethane-(meth)acrylates, polyamides, and mixtures thereof.

It is particularly preferred when the one or more film forming agents (of the ink) comprise (preferably consist of) one or more film forming agents selected from polyurethanes, polyamide-polyurethane copolymers, polyacrylates, in particular polystyrene (meth)acrylate and/or polystyrene (meth)acrylic copolymer, and mixtures thereof.

In a further preference, the one or more emulsifiers (of the ink) comprise (preferably consist of) at least one emulsifier with an HLB value of at least 12, preferably at least 15 and more preferably at least 17. Alternatively, or in addition thereto, the one or more emulsifiers may comprise (preferably consist of) at least one non-ionic emulsifier, more preferably a poly(alk)oxylated, non-ionic emulsifier and even more preferably a non-ionic, poly(alk)oxylated sorbitan or most preferably a non-ionic, fatty acid ester of poly(alk)oxylated sorbitan or a derivative thereof. Said at least one emulsifier with an HLB value of at least 12 is preferably said at least one non-ionic emulsifier.

In another embodiment of the ink, the weight ratio of the emulsifiers to the film forming agent is from 0.01 to 2.0.

In yet another preferred embodiment, the aqueous ink additionally comprises one or more surfactants, preferably wherein the total surfactant (other than emulsifier) concentration in the aqueous ink is from 0.05 to 5 wt.% (more preferably from 0.1 to 2 wt% even more preferably from 0.1 to 1.5 wt.%, yet more preferably from 0.2 to 1 wt.%, and most preferably from 0.2 to 0.5 wt%); it is yet particularly preferred if the total surfactant (other than emulsifier) concentration in the aqueous ink is from 0.1 to 5.0 wt%, preferably from 0.1 to 2.0 wt%, more preferably from 0.5 to 1.8 wt% and most preferably from 1.0 to 1.8 wt% (for example 1.6 wt%).

In particular, the one or more surfactants (of the ink) may comprise (preferably consist of) at least one (poly)siloxane surfactant, in particular at least one polyether-modified (poly)siloxane surfactant. In a preferred embodiment, the surfactant comprises a first (poly)siloxane surfactant, in particular a polyether-modified (poly)siloxane surfactant, in combination with a second surfactant other than (poly)siloxane surfactant, preferably a 2,4,7,9-tetramethyl-4,7-decanediol surfactant.

In another embodiment, the aqueous ink has a Brookfield viscosity of more than 3 mPa s, more preferably more than 4 mPa s measured at 35°C, a static surface tension from 21 to 45 mN/m measured at 25°C and/or a dynamic surface tension from from 30 mN/m to 60 mN/m, more preferably from 35 mN/m to 59 mN/m and most preferably from 40 mN/m to 58 mN/m measured at 25 °C at a frequency of 10 Hz (all of them measured at 1 atm).

In yet another embodiment of the present invention, the aqueous ink further comprises one or more sugar alcohols and/or saccharides, preferably wherein their total concentration in the aqueous ink is from 0.1 to 10 wt.%.

In another embodiment, the aqueous ink further comprises one or more plasticizers, wherein the total plasticizer concentration in the aqueous ink is from 0.1 to 5 wt.%; preferably wherein the one or more plasticizers comprise a polypropylene glycol alkylphenylether.

Alternatively, or in addition to the inks described above, the inventive method, use and set may be used/provided with other inks, for instance with suitable (depending on the respective application) commercially available inks, particularly inkjet inks, or with inks disclosed in one or more of the following documents:
WO 2021/105441 A1 relates to an aqueous ink comprising one or more film forming agents, wherein the total film forming agent concentration in the aqueous ink is from 0.1 wt.% to 30 wt.%, and optionally one or more emulsifiers. The one or more emulsifiers, if present, are fatty acid esters of polyalkoxylated sorbitan and/or the one or more film forming agents fulfil at least one of the following properties: a Young modulus of at least 2 GPa, and a nano hardness of at least 0.08 GPa. This ink may be used for inkjet printing, preferably on a corrugated board or on a liner for the production of corrugated board. In a particular preference, the inventive method, use and set may be used/provided with an ink comprising any one of pigment concentrates B1 to B3 disclosed in Table 1 of WO 2021/105441 A1 or any one of inks 1 to 10 disclosed in Table 2 of WO 2021/105441 A1.
US 2014/0022321 A1 describes an aqueous ink that can be used for recording on various types of recording media, wherein the ink can form images and characters exhibiting high rub fastness and little non-uniformity in density even on ink-non-absorbent and ink-low-adsorbent recording media. In addition, the ink can prevent nozzles from being clogged and can be stably stored. The ink comprises colouring material, 0 %-20 % of 1,2-pentanediol and 1,2-hexanediol.
US 2013/0300799 A1 describes inks with characteristics (1) and (2). (1) Ink, which includes a first resin having a heat distortion temperature of 10°C or less. (2) Ink, which includes a second resin and includes substantially no glycerine.
US 6,818,054 B2 describes the production of a pigment dispersion used in an ink for inkjet recording, involving dispersing a mixture comprising a pigment, a dispersant, a polysiloxane surfactant and/or an alkanediol, a polyhydric alcohol, and water. A process for producing an ink is also disclosed wherein the above pigment dispersion is mixed with a member selected from the group consisting of water, a surfactant, a wetting agent, a pH adjustor, and mixtures thereof. This ink is said to realize good image quality.
WO 2007/072951 A1 discloses an inkjet ink.
US 5 852 075 A relates to an inkjet ink comprising an aqueous medium, a colorant comprising a pigment and a polymeric dispersant, and a mixture of surfactants consisting of, inter alia, at least one siloxane surfactant selected from the group consisting of a polyethylene modified siloxane.
US 2003/188665 A1 concerns inks. It is disclosed that the amount of pigment added is preferably about 1% to 30% by weight. Further, it is disclosed that the amount of dispersant added may be 0.2% to 30% by weight. It is further disclosed that any surfactant commonly added to inks may be utilised.
US 2003/081086 A1 relates to inkjet inks. An ink is disclosed which comprises water, polyoxyethylene cetylether, C.I. pigment yellow 128 and a block copolymer of AB type having an acid value of 300 and a number average molecular weight of 4000 prepared from benzyl methacrylate and methacrylic acid as starting materials.
US 2016/311233 A1 discloses white inks, comprising an urethane resin, a non-ionic surfactant and glycols.
US 2015/138284 A1 relates to an inkjet ink. The underlying aim was to provide an inkjet ink that exhibits good drying property and provides a printed portion having a high level of gloss and being excellent in scratch resistance, ethanol resistance, blocking resistance and light resistance when it is used for printing on a non-porous base material.
US 2017/282557 A1 discloses an ink which comprises an urethane-based fixing resin and a polyether-modified siloxane surfactant.
WO 2013/131924 A1 relates to a latex ink for inkjets. Example 1 discloses such a composition comprising an acrylic styrene copolymer emulsion and the anionic surfactant sodium dioctyl sulfosuccinate.
US 2014/022321 A1 concerns inks with 1,2-pentanediol and 1,2-hexanediol.
EP 1 469 049 A1 relates to water-based inkjet inks containing an ultraviolet curable humectant, in particular for cardboards. Examples 1 and 5 disclose aqueous inks with 9% (w/w) acrylic resin and 0.3% (w/w) polyether-modified siloxane surfactant. The inkjet ink of example 5 also comprises 20% (w/w) glycerol as humectant.

Particular features of the present invention are explained in more detail below and may be combined with each other within the context of the invention, as well as with the embodiments set forth above.

### COATING COMPOSITION

The coating composition based on the (colloidal) inorganic nanoparticles as disclosed herein significantly improves the heat abrasion resistance of the ink layer. It turned out that the z-average diameter of the inorganic nanoparticles (as determined by DLS, in particular according to ISO 22412:2017) should be at most 100 nm, preferably at most 50 nm, even more preferably at most 20 nm to obtain a sufficiently transparent (i.e. not completely covering) coating, as otherwise the coating may have a negative impact on the optical appearance of the overcoated substrate, in particular negatively affecting the colour development of coloured inks and the colour gamut of the inkjet inks.

As used herein, the terms "inorganic nanoparticles" and "inorganic particles" are interchangeable.

The coating composition preferably comprises a humectant to reduce drying and caking of the coating composition upon application. Suitable humectants can be selected from the polyols and urea compounds, preferably modified ureas. Further suitable humectants are disclosed herein. Alternatively, or in addition thereto, the coating composition may comprise one or more wetting agents to effectively wet the underlying ink layer. Suitable wetting agents are also disclosed herein.

In another preferred embodiment, the coating composition comprises a wax or thermoplastic material with melting range starting above 100°C, more preferably starting above 120°C and even more preferably starting above 130°C, and particularly preferably showing two melting ranges, the first starting above 100°C and the second starting above 200°C. The addition of particles of a wax or thermoplastic material may lead to increased slip and abrasion-resistance properties of the coating during processing in the corrugator.

It is particularly preferred when the wax is a high density polyethylene (HDPE)/ polytetrafluoroethylene (PTFE) wax, such as for instance commercially available as Ultralube E-801 (which has a first melting range around 125°C and a second melting range at around 326°C). The coating composition preferably comprises a wax or thermoplastic material with melting range starting above 100°C, more preferably starting above 120°C and even more preferably starting above 130°C, and particularly preferably showing two melting ranges, the first starting above 100°C and the second starting above 200°C; preferably in a concentration from 0.1 to 10 wt%, preferably from 0.1 to 8.0 wt%, more preferably from 0.1 to 6.0 wt%, even more preferably from 0.5 to 6.0 wt% and most preferably from 1.5 to 6.0 wt%, e.g. 2.0 to 5.0 wt% with respect to the total composition.

Preferred commercially available wax or thermoplastic material that can be used in the overcoating composition are known under the trade names ULTRALUBE (CHT Chemie, Germany), AQUACER (BYK, Germany), CERIDUST, LICOCENE, LICOWAX, LICOTAS, LICOCARE (all from CLARIANT, Switzerland), DEUTERON (Deuteron, Germany) but not limited to these. Preferred commercially available waxes are ULTRALUBE E-1046 S (melting range around 120°C), ULTRALUBE E-912 (melting range around 146°C), ULTRALUBE E-612 (melting range around 138°C), ULTRALUBE E-530 V (melting range before crosslinking around 127°C, after crosslinking 220°C) (all from CHT Chemie, Germany) and mixtures thereof.

According to a further embodiment, the coating composition comprises less than 3 wt% color pigments and/or dyes, and preferably is free of any color pigments and/or dyes. In the context of the present invention, a "color pigment" or a "dye" is a compoundthat contains chromophores. Silica, for instance, is thus not understood to be a color pigment. Consequently, it is also highly preferred that the overcoat obtained by the overcoating is free of any color pigments and/or dyes .

However, in certain embodiments, the coating composition may also comprise dyes such as fluorescent and/or phosphorescent dyes (but less than 6 wt% of dyes, such as fluorescent and/or phosphorescent dyes, preferably less than 3 wt% with respect to the total coating composition). Such embodiments may be particularly useful to include security features in the coating (e.g.: fluorescence under a UV light source).

It is further particularly preferred, that the coating composition is free of any color pigments and dyes. Consequently, it is also highly preferred that the overcoat obtained by the overcoating is free of any color pigments and dyes (i.e. the overcoat is colorless).

According to a particularly preferred embodiment, the coating composition is prepared as a varnish (also known as overprint-varnish) composition, these terms and their respective meaning being well-understood by a skilled person.

### [Other optional components]

For other preferred components (humectants, surfactants, rheology control agents, biocides) see also below, in particular in section titled "FURTHER COMPONENTS". SET FOR PRINTING ON OR OVERCOATING A SUBSTRATE

The inks and coating compositions disclosed herein may be provided in the form of a set. This set typically comprises at least one colored ink (such as black, cyan, magenta or yellow) in separate containers. This set may comprise further one or more containers with spot color inks (which are not CMYK inks) to increase the color gamut; for example, the addition of violet (V), orange (O) and/or green (G) ink to the set (in case V, O and G are present in addition to CMYK, such set is termed CMYKVOG). In addition, or alternatively thereto, one or more of the CMYK inks may be replaced with inks with different colors (e.g. Magenta (M) for red (R)).

According to a preferred embodiment, the inventive set comprises two or more containers A, e.g. A1, A2, A3 and A4, wherein preferably container A1 comprises a cyan (C) ink; container A2 comprises a magenta (M) ink; container A3 comprises a yellow (Y) ink; and container A4 comprises a black (K) ink.

### PIGMENT CONCENTRATE

The combination of a non-ionic surfactant with a HLB value of at least 12, preferably at least 15 and more preferably at least 17 in a concentration range from 0.1 to 10 wt.%, and preferably from 0.2 to 7 wt.% and more preferably from 1 to 6 wt.%, even more preferably from 3 to 5 wt%, yet more preferably 3 to 4 wt% and most preferably 3 to 3.8 wt% and a pigment dispersing agent in the concentration range from 0.5 to 5 wt.%, more preferably from 0.75 to 4.5 wt.%, for example 1.75 to 4.5 wt% and even more preferably from 1.0 to 4.2 wt.%, in an aqueous pigment concentrate is particularly advantageous. Preferably, the weight ratio of a non-ionic surfactant with an HLB value at of least 12, preferably at least 15 and more preferably at least 17 to a pigment dispersing agent is from 0.1 to 5, preferably from 0.5 to 4, more preferably from 1 to 3, and/or the weight ratio of the sum of the content of a non-ionic surfactant with high HLB value of at least 12, preferably at least 15 and more preferably at least 17 and the content of a pigment dispersing agent to the pigment is from 0.10 to 0.80, more preferably from 0.25 to 0.65.

In embodiments, it is particularly preferred when the one or more non-ionic surfactants with an HLB value of at least 12 comprise a polyalkoxylated surfactant (or consist of polyalkoxylated surfactants).

In a particularly preferred embodiment the weight ratio of a non-ionic surfactant with an HLB value at of least 12, preferably at least 15 and more preferably at least 17 to a pigment dispersing agent is from 0.5 to 2.5, more preferably 0.5 to 2.0, more preferably 0.8 to 2.5, more preferably 0.8 to 2.0, more preferably 1.5 to 2.0 and even more preferably 1.7 to 2.0, and/or the weight ratio of the sum of the content of a non-ionic surfactant with high HLB value of at least 12, preferably at least 15 and more preferably at least 17 and the content of a pigment dispersing agent to the pigment is from 0.26 to 0.50, more preferably from 0.27 to 0.50, more preferably from 0.28 to 0.50, more preferably from 0.29 to 0.50, even more preferably from 0.29 to 0.45 and most preferably from 0.29 to 0.40.

These non-ionic surfactants with a HLB value at least 12, preferably at least 15 and more preferably at least 17 in combination with a pigment dispersing agent turned out to create an effective organic shell at the pigment surface via specific and non-specific interaction mechanisms, like, van der Waal's forces, hydrogen bonding, dipole-dipole interactions, ion-ion or ion-dipole interactions thereby inhibiting pigment particles to interact with each other leading to a viscosity increase when the pigment concentrate or the ink are stored at elevated temperatures. Without being bound to any particular theory, the mechanism of creation of such effective organic shells at the pigment surface is believed to be as follows: The pigment dispersing agent that may be, for example, a styrene-acrylic resin with pigment affine groups, creates a loose macro network at the pigment surface, where not every available active site of the pigment surface is effectively saturated by the pigment affine groups of the dispersing agent or where the interaction between the surface active sites and the pigment affine groups of the dispersing agent is not sufficiently strong due to steric hindrances. This leads to possibilities for other pigment concentrate components or ink components to have effective exchange at the pigment surface and resulting in desorption of the pigment dispersing agent causing coagulation of pigment particles and thus pigment concentrate and ink instability. The smaller, non-ionic surfactant molecules with a HLB value of at least 12, preferably at least 15 and more preferably at least 17, characterized by high hydrophilicity, effectively attach to the non-occupied active surface sites of the pigment particles inhibiting these sites to be available for intermolecular exchange with other pigment concentrate components or ink components, thus inhibiting dewetting of the pigment particles' surface and therefore assuring higher stability of the pigment concentrates and inks based on pigment concentrates, in particular when being exposed to elevated temperatures.

Furthermore such a combination in the pigment concentrate of a non-ionic surfactant with a HLB value of at least 12, preferably at least 15 and more preferably at least 17 in the concentration range from 0.1 to 10 wt.%, and preferably from 0.2 to 7 wt.%, more preferably from 1 to 6 wt.%, even more preferably from 3 to 5 wt%, yet more preferably from 3 to 4 wt% and most preferably from 3 to 3.8 wt% and a pigment dispersing agent in the concentration range from 0.5 to 5 wt.%, more preferably from 0.75 to 4.5 wt.%, for example 1.75 to 4.5 wt% and even more preferably from 1.0 to 4.2 wt.%, wherein preferably the weight ratio of a non-ionic surfactant with high HLB value of at least 12, preferably at least 15 and more preferably at least 17 to a pigment dispersing agent is from 0.1 to 5, more preferably from 0.5 to 4, and more preferably from 1.0 to 3 and the weight ratio of the sum of the content of a non-ionic surfactant with high HLB value of at least 12, preferably at least 15 and more preferably at least 17 and the content of a pigment dispersing agent to the pigment is from 0.10 to 0.80, preferably from 0.25 to 0.65 effectively reduces any signs of open-time (start-up) issues, especially when ink jetting is performed with the delay time between one and the next drop ejection of at least 1 min, preferably 5 min, more preferably 20 min and even more preferably 40 min.

[High HLB value surfactant] The high HLB value surfactant used for the preparation of the pigment concentrate may also be considered as secondary dispersing agent, as it supports the action of the pigment dispersing agent. Preferred non-ionic surfactants with a HLB value of at least 12, preferably at least 15 and more preferably at least 17 are polyalkoxylated surfactants commercially available under the trade names ZETASPERSE^{®}179 (HLB = 17,9), ZETASPERSE^{®}182 (HLB 18,2), Surfynol 485 (HLB = 17) (all Evonik), Hydropalat WE3135 (HLB = 19) (BASF), Hydropalat WE3147 (HLB = 18) (BASF), Hydropalat WE3167 (HLB = 16) (BASF), Hydropalat WE3320 (HLB = 14) (BASF), and mixtures thereof.

[Pigment dispersing agent] The pigment dispersing agent when present in the (aqueous) pigment concentrate is preferably an organic resin or polymer or oligomer (resin, polymer and oligomer are used synonymously within the present application) with pigment affine groups, more preferably a styrene-acrylic or stryrene-acrylate resin with pigment affine groups. The organic resin with pigment affine groups preferably has a weight average molecular weight Mw from 3000 to 70000, more preferably from 5000 to 50000 and even more preferably from 10000 to 25000 g/mol. The pigment affine groups may e.g. be chosen from various functional groups that are capable of interacting with pigment particles such as acid (COOH), hydroxyl (OH) and amine (NH2) groups. Preferably, the pigment affine groups are acid groups and preferably the resin has an acid value (AV) in the range of 5 to 300 mgKOH/g, more preferably 5 to 250 mgKOH/g, more preferably from 5 to 100 mgKOH/g, more preferably from 5 to 80 mgKOH/g. In certain embodiments, the pigment affine groups are acid groups and preferably the resin has an acid value (AV) in the range of 40 to 280 mgKOH/g, preferably 60 to 250 mgKOH/g. In a particularly preferred embodiment, the pigment affine groups are acid groups and preferably, the resin has an acid value (AV) of at least 150 mgKOH/g, preferably at least 200 and most preferably at least 220 mgKOH/g.

Preferably, the glass transition temperature Tg of said organic resin with pigment affine groups is 20 to 170°C, more preferably 70 to 130°C and even more preferably 100 to 120°C. In other embodiments, the Tg of said organic resin with pigment affine groups is at least 20°C, preferably at least 60°C, preferably at least 70°C, preferably at least 80°C, preferably at least 90 °C and more preferably at least 100 °C.

Suitable, non-limiting pigment dispersing agents are available under the trade names SOLSPERSE^{®} (The Lubrizol Corporation), JONCRYL^{®} (BASF), EFKA^{®} (BASF), DISPEX ULTRA^{®} (BASF), BYK^{®} (BYK Chemie), DISPERBYK^{®} (BYK Chemie), BYKJET^{®} (BYK Chemie), TEGO DISPERSE^{®} (Evonik).

When the weight average molecular weight Mw of the organic resin with pigment affine groups is below 3000 g/mol, the dispersing ability of the resin generally turned out to be lower and the pigment dispersion generally turned out to be less stable due to particle coagulation/flocculation, and when the Mw of the organic resin with pigment affine groups is above 70000 g/mol the drop formation (drop break off) during ink jetting generally turned out to become less stable.

The acid value of the resin is the measure of the number of carboxylic acid groups in the material. When the acid value of the organic resin with pigment affine groups is lower than 5 mgKOH/g or higher than 300 mgKOH/g the pigment dispersing ability of the organic resin was not as good, generally resulting in lower stability of the dispersed pigments.

In case the glass transition temperature Tg of the organic resin with pigment affine groups is lower than 20°C there is a higher probability of spontaneous destabilisation of the ink during continuous recirculation through the print-heads with fine filters and channels inside due to softening/adhesion of the resin to the filter membrane either in the ink supply system or in the print head. On the other hand, when the Tg of the organic resin with pigment affine groups is above 170°C the film formation of the ink layer during drying is more likely to be impaired. However, it was found that it is highly beneficial if the Tg of the organic resin with pigment affine groups is at least 60 °C, preferably at least 80 °C.

[Pigment] Suitable pigments to be used for the (aqueous) pigment concentrate can be of organic or inorganic nature or mixtures thereof. The pigment may be a mixture of different types of pigments to obtain the desired optical appearance. Exemplary inorganic pigments are, e.g., titanium dioxide, silicon dioxide, aluminium dioxide, calcium dioxide, magnesium dioxide, zinc dioxide or mixtures thereof and carbon black, whereas suitable organic pigments may exemplarily be chosen from following classes: phthalocyanine, anthrachinone, perylene, carbazole, monoazo- and bisazobenzimidazolone, isoindolinone, monoazonaphthole, quinacridone, diazopyranthrone, pyrazolone and pyranthrone. Especially preferred are organic pigments chosen from following substance classes: copper phthalocyanine blue pigments, phthalocyanine green pigments quinacridone pigments, diketopyrrolopyrrol-pigments, dioxazine-based pigments, monoazo-, diazo-, polyazo-, azido-, quinophthalone yellow pigments, carbon black.

Examples of commercially available organic pigments are listed in Colour Index, Volume 1-8, Society of Dyers and Colourists, Yorkshire, England and are to name a few, e.g., pigment blue 1, pigment blue 15, pigment blue 15:1, pigment blue 15:2, pigment blue 15:3, pigment blue 15:4, pigment blue 15:6, pigment blue 16, pigment blue 24, pigment blue 60, pigment brown 5, pigment brown 23, pigment brown 25, pigment yellow 3, pigment yellow 14, pigment yellow 16, pigment yellow 17, pigment yellow 24, pigment yellow 65, pigment yellow 73, pigment yellow 74, pigment yellow 83, pigment yellow 95, pigment yellow 97, pigment yellow 108, pigment yellow 109, pigment yellow 110, pigment yellow 113, pigment yellow 128, pigment yellow 129, pigment yellow 138, pigment yellow 139, pigment yellow 150, pigment yellow 154, pigment yellow 155, pigment yellow 156, pigment yellow 175, pigment green 1, pigment green 7, pigment green 10, pigment green 36, pigment orange 5, pigment orange 15, pigment orange 16, pigment orange 31, pigment orange 34, pigment orange 36, pigment orange 43, pigment orange 48, pigment orange 51, pigment orange 60, pigment orange 61, pigment red 4, pigment red 5, pigment red 7, pigment red 9, pigment red 22, pigment red 23, pigment red 48, pigment red 48:2, pigment red 49, pigment red 112, pigment red 122, pigment red 123, pigment red 149, pigment red 166, pigment red 168, pigment red 170, pigment red 177, pigment red 179, pigment red 190, pigment red 202, pigment red 206, pigment red 207, pigment red 224, pigment red 254, pigment violet 19, pigment violet 23, pigment violet 32, pigment violet 37, pigment violet 42, pigment black 6 and pigment black 7 and Pigment Black PB 7.

Especially preferred examples of commercially available organic pigments are PV Fast Blue BG-NIP (Pigment Blue 15:3, Clariant), Heliogen Blue D 7088 (Pigment Blue 15:3, BASF), Heliogen Blue D 7086 (Pigment Blue 15:3, BASF), Heliogen Blue D 7110 F (Pigment Blue 15:4, BASF), Hostaperm Blue BT 617 D (Pigment Blue 15:4, Clariant), Ink Jet Magenta E 02 (Pigment Red 122, Clariant), Ink Jet Magenta E7B VP 3958 (Pigment Red 122, Clariant), Cinquasia Magenta D 4550 J (Pigment Red 122, BASF), Ink Jet Yellow 4G (Pigment Yellow 155, Clariant), Paliotol^{®} Yellow D 1115 J (Pigment Yellow 155, BASF), Paliotol Yellow D 0960 (Pigment Yellow 138, BASF), Inkjet Magenta E5B 02 (Pigment Violet 19, Clariant), Black pearls 800 Carbon black (Cabot), Monarch 800 Carbon black (Cabot).

[Pigment wetting agent] According to another embodiment of the pigment concentrate further comprises a pigment wetting agent (i.e. humectant) in the concentration range from 3 to 15 wt.%, and more preferably from 5 to 12 wt.%. The wetting agents are preferably selected from the group of water soluble organic compounds with a boiling point of at least 60°C, more preferably at least 100°C and even more preferable at least 130°C (at a pressure of 1 atm), such as polyols, e.g., ethylene glycol, diethyleneglycol, 1,2-propylene glycol, di- and tripropylene glycol, triethylene glycol, tetraethylene glycol, 1,3-propylene glycol, 1,3-butylene glycol, 1,4-butylene glycol, 1,5-pentanediol, 1,2-hexanediol, glycerol and mixtures thereof. The pigment wetting agent(s) effectively pre-wet the surface of the pigments thereby facilitating the attraction of the pigment dispersing agent and the non-ionic surfactant with a HLB value of at least 12, preferably at least 15 and more preferably at least 17.

In case the boiling point of the pigment wetting agent is below 60°C (at a pressure of 1 atm) there is an increased risk of its substantial loss/evaporation during pigment concentrate production and/or continuous ink recirculation in the ink supply system and/or its evaporation from the ink through the print head nozzles with subsequent nozzle clogging. Therefore, it is preferable for the wetting agent to have a boiling point of at least 60°C (at a pressure of 1 atm), more preferably at least 100°C and even more preferably at least 130°C in order to be more effectively maintained in the pigment concentrate and ink.

[Additives] According to further embodiment of the (aqueous) pigment concentrate further contains a biocide and/or a defoaming agent. The biocide may be used for effectively suppressing bacterial growth in the pigment concentrate and the corresponding ink and a defoaming agent may be used for decreasing air trapping and foam development in the pigment concentrate and the corresponding ink during action of shear forces while stirring, grinding, filtration, printing, and the like. Further additives such as chelating agents, rheology modifiers, pH control agents (organic and/or inorganic bases, acids), inorganic oxides, salts, etc. as known by a person skilled in the art having the benefit of the present disclosure may also be added to the pigment concentrate.

### INK

The (aqueous) ink of the inventive method (the "at least one ink" printed on the area of the substrate) or of the inventive set (e.g. provided in container A1, A2, A3 and/or A4) is particularly suitable for the application in single-pass and also multi-pass printing on various substrates, in particular absorbing substrates, such as paper, coated paper, liner for the production of corrugated board or corrugated board and even suitable for inline printing applications in a corrugator or within the corrugated board production line. The inks are particularly suitable for single-pass applications.

The inks, in particular comprising a pigment concentrate as described herein, turned out to have a decreased risk of suffering from open-time (start-up) issues and/or to feature high heat abrasion resistance, long-term stability of the ink under continuous recirculation, and/or at the same time guarantee the availability of the inkjet printing unit for in-line operation in the corrugator or within the corrugated board production line with high image quality. Said inks preferably comprise preferably 5 to 50 wt.%, in particular 10 to 30 wt.%, of the pigment concentrate as described herein (alternatively, also other, commercially available pigment concentrates may be used) and preferably additionally 50 to 95 wt.%, more preferably 70 to 90 wt.% of a pigment concentrate carrying liquid comprising preferably
- One or more polyols (= polyfunctional alcohols) with at least 2 hydroxyl groups) and/or glycol ethers in a concentration range from 0.1 to 30 wt.%
- One or more film forming agents, in a concentration range from 0.1 to 30 wt.%,
- Preferably one or more surfactants, in a concentration range from 0.05 to 5.0 wt.%.
and water as balance.

However, in other embodiments, commercially available pigment concentrates may be used instead of the pigment concentrates as described herein to manufacture the inks. Such commercial pigment concentrates may be for instance self-dispersible pigment dispersions such as available from CABOT (Cab-O-Jet) and pigments with anchored crosslinked dispersants creating a shell around the pigment core available from Fujifilm Imaging Colorants (Pro-Jet Pigment Dispersions).

Preferably, inks used in or provided with the present invention preferably do not show any significant ink open-time (start-up) issues when ink jetting is performed with a delay time of at least 1 min, preferably 5 min and more preferably 20 min and even more preferably 40 min. This effect may even be achieved with ink formulations comprising a low content of humectants and/or volatile organic compounds (VOCs).

It is particularly advantageous if the ink has a viscosity of more than 3 mPa s, preferably more than 4 mPa s, more preferably from 4 to 15 mPa s, yet more preferably from 5 to 10 mPa s and even more preferably from 5 to 6.5 mPa s at 35 °C (and 1 atm). In certain embodiments, the ink has a viscosity from 3 to 15 mPa s, preferably from 3 to 10 mPa s and more preferably from 3.5 to 6 mPa s measured at 35°C (and 1 atm).

Preferably, a static surface tension of the ink ranges from 21 to 45 mN/m, more preferably from 23 to 30 mN/m and even more preferably from 25 to 29 mN/m measured at 25°C and/or a dynamic surface tension of the ink ranges from from 30 mN/m to 60 mN/m, more preferably from 35 mN/m to 59 mN/m and most preferably from 40 mN/m to 58 mN/m measured at 25 °C at a frequency of 10 Hz.

In case the ink viscosity is as described above, such an ink turned out to be more successfully jetted using state of the art industrial print heads, especially suitable for high resolution printing up to 1200 dpi with low native drop size of below 15 pL, more preferably below 10 pL and even more preferably below 7 pL.

The static surface tension of inks determines drop break off from the print head nozzle and ink spreading on the substrate. In case the static surface tension is from 21 to 45 mN/m, more preferably from 23 to 30 mN/m and even more preferably from 25 to 29 mN/m as measured at 25°C, the ink break off from the nozzle orifice having a hydrophobic nature (having ink and/or water repellent property), is substantially facilitated. Furthermore, the ink spreading on the substrate under conditions of single-pass in-line printing on different paper surfaces, especially coated papers, is significantly improved, showing significantly less ink mottling (undesired uneven print density effects and colour variations). Inks with a static surface tension above 45 mN/m as measured at 25 °C show significant mottling issues. Inks with a surface tension below 21 mN/m over-wet the nozzle plates resulting in uncontrolled wetting of the nozzle plate, which imparts the drop formation during printing.

The dynamic surface tension of inks determines the acting-speed of the surfactants used in the ink composition when a new ink surface, like a droplet at the inkjet head, is formed. A dynamic surface tension as specified above, was found beneficial on the bleeding behaviour (undesired flowing of one color into another) of the inks on the substrate, especially on coated papers in a single-pass in-line printing application and thus resulted in improved printing quality. This effect was particularly pronounced in case the static surface tension of the ink was below 30 mN/m. Inks with a dynamic surface tension above 60 mN/m as measured at 25°C show significant bleeding issues. Inks with a dynamic surface tension below 30 mN/m show uneven print density effects on the substrate.

### FURTHER COMPONENTS

[Humectant] The coating composition and/or the aqueous (inkjet) ink preferably comprise liquid humectants, which most often are volatile organic compounds (VOCs), such as solvents, in particular mono alcohols, glycols, polyols, glycolethers, polyolethers, ureas, modified ureas and the like. These humectants most often are low molecular weight organic compounds, that have a boiling point at ambient temperature (25°C, 1 atm) or above, in particular above the processing temperature of the ink (e.g.: between 30 and 60 °C). Preferably, humectants with a boiling point of at least 60 °C, preferably 80 °C, more preferably 100 °C, even more preferably of at least 120 °C are employed as humectants in order to avoid their evaporation in the course of production and processing within the printer. In certain embodiments, the humectants have a boiling point of between 100 and 200 °C, preferably between 120 and 180 °C. Such humectants may be properly removed in the drying process. Preferably, the humectants have a good solubility in water (i.e. a solubility of more than 10 g/L at 20°C). The coating composition and/or the aqueous (inkjet) ink preferably comprises less than 40 wt%, preferably less than 30 wt%, more preferably less than 20 wt%, even more preferably less than 10 wt%, yet more preferably less than 8 wt% and most preferably less than 6 wt% of humectant with respect to the total weight. Coating compositions and/or inks with less than 20 wt% of humectants are particularly preferred. Polyols, glycols and ethers thereof, ureas and modified ureas are used preferably as humectants. A low concentration of humectants is desirable, as thus the VOC emission during the printing process, in particular during the drying process, may be reduced.

Polyols, glycols and ethers thereof, as well as ureas and modified ureas are preferably used as humectants. According to an embodiment, one or more polyols (= polyfunctional alcohols) with at least 2 hydroxyl groups and/or glycol ethers and/or polyol ethers, and/or ureas and/or modified ureas are present in the ink or coating composition in a concentration range of 0.1 to 30 wt.%, preferably 0.1 to 20 wt%, more preferably 1 to 10 wt%, even more preferably 1.5 to 8 wt%, e.g. 2.0 to 4.0 wt%, yet more preferably 3 to 7 wt%, yet even more preferably 3 to 6 wt%, e.g. 3.1 to 5.8 wt% and most preferably 4 to 6 wt% and are preferably selected from the group of water soluble organic compounds with a boiling point of at least 120°C (at a pressure of 1 atm), such as ethylene glycol, diethylene glycol, 1,2-propylene glycol, di- and tripropylene glycol, triethylene glycol, tetraethylene glycol, 1,3-propylene glycol, 1,3-butylene glycol, 1,4-butylene glycol, 1,5-pentanediol, 1,2-hexanediol, 1,6-hexanediol, glycerol, urea, modified urea and mixtures and/or ethers thereof. These compounds effectively inhibit water evaporation at the nozzles' orifice therefore reducing the risk of drying at the nozzles' orifice reducing nozzle clogging, ink deposition at the nozzles' orifice, formation of the deflected ink drops and printing defects. On the other hand, these compounds increase easy resolubility if premature drying has happened. However, alternatively to the polyols, glycols, polyol ethers and glycol ethers, ureas and modified ureas as described above, other suitable humectants as known in the art may be employed in addition to or alternatively to these compounds.

According to a further embodiment, the inks or coating compositions (further) comprise one or more sugar alcohols and/or saccharides that are preferably solid or liquid at ambient conditions (25,°C; 1 atm) and are preferably soluble in water and are preferably present in the ink or coating composition in a concentration range of 0.1 to 10 wt%, preferably of 0.3 to 3 wt% and most preferably of 0.5 to 2.5 wt%; e.g.: 2 wt%. The preferable sugar alcohols or saccharides are monosaccharides, disaccharides, tri- or polysaccharides, e.g., threitol, erythritol, arabinol, ribitol, xylitol, sorbitol, mannitol, iditol, lyxitol, rabinol, iditol, gulitol, talitol, galactiotol, allitol, alttritol, maltitol, sorbitol, isomaltitol, lactitol, turanitol, derivatives and mixtures thereof. The sugar alcohols and/or saccharides effectively inhibit water evaporation at the nozzles' orifice therefore reducing the risk of drying at the nozzles' orifice reducing nozzle clogging, ink deposition at the nozzles' orifice, formation of the deflected ink drops and printing defects. On the other hand, these compounds increase easy resolubility if premature drying has happened.

Especially preferred humectants in case of the coating composition are humectants selected from monoalcohols, polyols, glycols, ethers thereof, urea, modified (i.e. substituted) urea and combinations thereof, more preferably selected from modified urea.

[Surfactant] According to a further embodiment of the present invention, the inks or coating compositions (further) comprise one or more surfactants, preferably in a concentration range from 0.05 to 5 wt.% (more preferably from 0.1 to 2 wt% even more preferably from 0.1 to 1.5 wt.%, yet more preferably from 0.2 to 1 wt.%, and most preferably from 0.2 to 0.8 wt%, e.g. from 0.2 to 0.5 wt%; with respect to the total weight of the ink or the coating composition).

According to a preferred embodiment, the surfactant is or comprises one or more (poly)siloxane surfactants, preferably one or more polyether modified (poly)siloxane surfactants, preferably in a concentration range from 0.05 to 5 wt.%, more preferably from 0.1 to 2 wt% even more preferably from 0.1 to 1.5 wt.%, more preferably from 0.2 to 1 wt.%, yet more preferably from 0.2 to 0.8 wt% and most preferably from 0.2 to 0.5 wt% (wt% is understood to be with respect to the total weight of the ink or the coating composition).

According to a preferred embodiment, the surfactant is or comprises one or more alcohol alkoxylate surfactants, preferably in a concentration range from 0.05 to 5 wt.%, more preferably from 0.1 to 2 wt% even more preferably from 0.1 to 1.5 wt.%, more preferably from 0.2 to 1 wt.% (wt% is understood to be with respect to the total weight of the ink or the coating composition).

According to a further preferred embodiment, the surfactant is or comprises one or more surfactants with a HLB value of at least 12, preferably at least 13, more preferably at least 14, yet more preferably at least 15, even more preferably at least 16 and most preferably at least 17, preferably in a concentration range from 0.05 to 5 wt.%, more preferably from 0.1 to 2 wt% even more preferably from 0.1 to 1.5 wt.%, more preferably from 0.2 to 1 wt.% (wt% is understood to be with respect to the total weight of the ink or the coating composition) .

According to a further preferred embodiment, the surfactant is or comprises at least two different (poly)siloxane surfactants, preferably in a concentration range from 0.05 to 5 wt.%, more preferably from 0.1 to 2 wt% even more preferably from 0.1 to 1.5 wt.%, more preferably from 0.2 to 1 wt.% (wt% is understood to be with respect to the total weight of the ink or the coating composition). Preferably at least one, more preferably at least two of these (poly)siloxane surfactants are polyether modified (poly)siloxane surfactants, in particular polyethoxylated poly(siloxane) surfactant. The combination of surfactants in combination with an emulsifier turned out to be particularly suitable for inks with a low content of humectants as a good wetting of the substrate, low mottling of the ink upon printing and good open time/start up behaviour of the ink could be achieved. Further, such inks showed excellent long-term stability of its static surface tension. A change of static surface tension (|σ₁-σ₃₀|) of the such inks measured after production (σ₁) and after storage at 40°C for 30 days (σ₃₀) of less than 0,5 mN/m as measured at 25 °C could be realized.

The following surfactants may be used in the inks or coating compositions without any limitation to these: diol and acetylene diol surfactants, alkoxylated acetylene diol surfactants (Surfynol 420, Surfynol 440, Surfynol 465, Surfynol 480, Surfynol 61, Surfynol TG, Surfynol AD-01, Surfynol 104, Surfynol 107 L, Dynol 360, Dynol 604, Dynol 607, Dynol 800, Dynol 810 all Evonik), fluorinated surfactants (Thetawet FS-8000, Thetawet FS-8050, Thetawet FS-8020 EB, Thetawet FS-8020 DB, all ICT Chemicals; Capstone FS-10, Capstone FS-30, Capstone FS-34, Capstone FS-35, Capstone FS-50, Capstone FS-51, Capstone FS-65, all DuPont), fluorocarbon-modified polyacrylate surfactants (Hydropalat WE 3370, BASF), sulfosuccinate surfactants (Hydropalat WE3475, Hydropalat WE3477, all BASF), polymer based and block copolymer surfactants (Hydropalat WE3111, Hydropalat WE3320, Hydropalat WE3322, Hydropalat WE 3323, all BASF), alkoxylated alcohol surfactants (DYNWET 800N, BYK-LP X 7113, BYK-LP X 23213, all ALTANA), siloxane gemini surfactants (TEGO TWIN 4000, TEGO TWIN 4100, TEGO TWIN 4200, Dynol 960, Dynol 980, all Evonik), alkylphenol alkoxylate surfactants (Triton X-100, Triton X-114, Triton X-405, all DOW Chemicals).

According to a particularly preferred embodiment, one or more polyether modified (poly)siloxane surfactants are used in the concentration range from 0.05 to 2 wt.%, e.g. from 0.1 to 1.2 wt% or from 0.2 to 1.0 wt%, such as 0.8 wt% with respect to the total ink or coating composition. These surfactants positively influence the ink and coating composition behaviour during the printing process, in particular wetting of the interior surface of the nozzle, as well as improve the wetting properties of the ink or coating composition on the substrate.

In case the polyether modified (poly)siloxane concentration in the aqueous inkjet ink or coating composition is from 0.05 to 2 wt.%, the static surface tension of ink may be adjusted to 21 to 45 mN/m, more preferably 23 to 30 mN/m and even more preferably 26 to 29 mN/m measured at 25°C.

The following commercially available polyether modified (poly)siloxanes are preferably used in the inks or coating compositions without any limitation to these: BYK 345 (ALTANA), BYK 346 (ALTANA), BYK 347 (ALTANA), BYK 348 (ALTANA), BYK 349 (ALTANA), BYK 307 (ALTANA), BYK 333 (ALTANA), BYK-3410 (ALTANA), BYK-3455 (ALTANA), BYK-LP X 21689 (ALTANA), BYK-3420, (ALTANA), TEGO WET 240 (EVONIK), TEGO WET 250 (EVONIK), TEGO WET 260 (EVONIK), TEGO WET 265 (EVONIK), TEGO WET 270 (EVONIK), TEGO WET 280 (EVONIK), TEGO WET 500 (EVONIK) Hydropalat WE3220 (BASF), Hydropalat WE3221 (BASF), Hydropalat WE3197 (BASF), Hydropalat WE3650 (BASF) and mixtures thereof.

According to a particularly preferred embodiment, the inks or coating compositions comprise at least one specific polyether modified (poly)siloxane that increases the stability of ink or coating composition wetting properties. In case at least one such specific polyether modified (poly)siloxane surfactant is used the long term stability of the ink static surface tension may be significantly improved. In case said inks are stored at 40°C for 1 month the change of the static surface tension (= the difference between the measured value of the static surface tension on the 1^{st} day after production and the measured value of the static surface tension on the 30^{th} day after production when the inks are stored at 40 °C) is not more than +- 2.5 mN/m, preferably not more than +- 1.5 mN/m as measured at 25 °C. The following commercially available polyether modified (poly)siloxanes are preferably used as the specific polyether modified (poly)siloxane surfactant: BYK 348 (ALTANA), BYK 349 (ALTANA), BYK-3455 (ALTANA), BYK-3420, (ALTANA), Hydropalat WE3220 (BASF), Hydropalat WE3221 (BASF) and mixtures thereof. Without being bound to any particular theory, the nature of the improved stability of the ink surface tension when stored at 40°C for 1 month is believed to be based on the increased hydrophobicity (due to an increased number of hydrophobic groups) of the specific polyether modified (poly)siloxanes and/or on the reduced number of ethylene oxide groups (see: Peng et al, J Surfact Deterg (2010) 13:75-81, DOI 10.1007/s11743-009-1144-4).

According to a further preferable embodiment, the inks or coating compositions comprise a mixture of one or more polyether modified (poly)siloxane surfactants or one or more polyether modified (poly)siloxane, preferably in the concentration range from 0.05 to 2 wt.%, more preferably from 0.05 to 0.5 wt.%, even more preferably from 0.1 to 0.4 wt.%; e.g.: 0.2 to 1.0 wt%, in particular 0.8 wt%, and one or more alcohol alkoxylate surfactants, preferably in the concentration range from 0.05 to 3 wt.%, more preferably from 0.05 to 1.5 wt.%, and even more preferably from 0.1 to 1 wt.% with respect to the total ink or coating composition.

In embodiments of the inks comprising a mixture of one or more polyether modified (poly)siloxane surfactants and one or more alcohol alkoxylate surfactants the static surface tension of the ink as measured at 25°C from is preferably from 21 to 32 mN/m, more preferably from 23 to 30 mN/m and even more preferably from 26 to 29 mN/m and the change of static surface tension (|σ₁-σ₃₀|) of the ink measured after production (σ₁) and after storage at 40°C for 30 days (σ₃₀) is less than 2.5 mN/m, more preferably, less than 1.5 mN/m, and even more preferably less than 0.5 mN/m as measured at 25 °C. In case of the coating composition, the following surfactants are especially preferred: (poly)siloxane surfactants, more preferably polyether-modified (poly)siloxane - surfactants, in particular polyethoxylated poly(siloxane) surfactants;
- alcohol alkoxylate surfactants;
- surfactants with an HLB value of at least 7, preferably at least 10, more preferably at least 12;
- copolymers of polypropylene and polyethylene oxide;
- 2,4,7,9-tetramethyl-4,7-decanediol;
- ethoxylated 2,4,7,9-tetramethyl-5-decyn-4,7-diol;
- ethoxylated fluorosurfactant;
- octylphenolethoxylate-based surfactants;
and mixtures thereof.

[Film forming agent]The inks preferably further comprise one or more film forming agents, in particular film forming polymers selected from polyurethanes, polyacrylates, in particular polystyrene-(meth)acrylates and/or polystyrene (meth)acrylic copolymers, polyesters, polyamide-polyurethane copolymers, polyamides and/or polyurethane-(meth)acrylates. Said film forming agents are preferably added to the compositions as dispersion (or emulsion; the term polymer dispersion will be used further in the text in order to describe both polymer dispersions or polymer emulsions) in water. The concentration of the film forming agents is preferably from 0.1 to 30 wt.%, more preferably from 0.1 to 20 wt%, even more preferably from 0.1 to 10 wt.%, yet more preferably from 0.25 to 7 wt.% and yet even more preferably from 0.5 to 5.5 wt.% with respect of the total ink. Preferably, the Young modulus of said film forming agent is at least 2 GPa, more preferably at least 3 GPa and/or the nano hardness is at least 0.08, preferably at least 0.1 GPa. The usage of a film forming agent in the ink composition improves the adhesion of the printed layers on the paper surface. Preferable film forming agent dispersions feature a mean particle size of the preferably polymeric particles up to 400-500 nm, more preferably up to 300 nm and even more preferably up to 250 nm. Preferable film forming agents feature a glass transition temperature from -50 °C to 250 °C, preferably from -50 °C to 200 °C, more preferably from-50 °C to 170 °C, even more preferably from 40 to 170 °C and most preferably from 80 to 170 °C. In particular preferred embodiments the film forming agent features a glass transition temperature of at least 80 °C, more preferably at least 90 °C and most preferably at least 100°C. Without being bound to any particular theory it is believed that a glass transitions temperature of at least 80°C of the film forming agent leads to a better recirculation behaviour of the ink in the printer. Film forming agents with a glass transition temperature of below 80°C tend to result in deteriorated recirculation behaviour of the ink, as such film forming agent tend to clog the filters within the printer, in particular within the print head by undesired film formation. Further, it was found that film forming agents with a Tg of at least 80 °C lead to a better heat abrasion resistance of the printed ink (= the print) on the substrate, which is particularly important for the inline application of an inkjet unit within a corrugator or within a corrugated board production line.

Furthermore, in case the film forming agent is provided as a dispersion, the film forming agent dispersion should feature suitable filtration characteristics. The suitable filtration characteristics of a polymer dispersion can be assessed as explained in the ink characterization part of the present application.

Inappropriate filtration properties of a polymer dispersion may arise due to an inappropriate particles size or particles size distribution of the polymer dispersion, swelling of the polymer particles in the pigment dispersion carrying liquid, etc.

The film forming agents, in particular the film forming polymers that may be used for the inks may for instance be selected from the groups of polyurethanes, polyacrylates, in particular polystyrene-(meth)acrylates and/or polystyrene (meth)acrylic copolymers, polyesters, polyamide-polyurethane copolymers, polyamides and/or polyurethane-(meth)acrylates polymers and mixtures thereof. Preferably, the film forming agent is added to the ink composition as aqueous dispersion. Exemplary, commercially available film forming agent dispersions are listed in the following:
JONCRYL^{®} 544, JONCRYL^{®} ECO 2117-E, JONCRYL^{®} ECO 2124-E, JONCRYL^{®} ECO 2177-E, JONCRYL^{®} ECO 2189-E, JONCRYL^{®} 538, JONCRYL^{®} 2038, JONCRYL^{®} 8050-E, JONCRYL^{®}8064, JONCRYL^{®}DTS 3775 (all BASF SE), Eastek^{®} 1000, Eastek^{®} 1100, Eastek^{®} 1200 (all EASTMAN), NeoCryl^{®} A-1131, NeoCryl^{®} A-1127, NeoCryl^{®} BT-24 (all DSM), Takelac^{®}W-6110, Takelac^{®}W-605, Takelac^{®}W-6010, Takelac^{®}W-6061, Takelac^{®}W-5661, Takelac^{®}W-5030, Takelac^{®}WS-6021, Takelac^{®}WS-5000, Takelac^{®}WS-4022, Takelac^{®}WS-5100, Takelac^{®}WS-4000 (all Mitsui Chemicals), Takelac^{®}WPB-341A, Dispurez^{®}101, Dispurez^{®}101A, Dispurez^{®}102, Dispurez^{®}102A, Dispurez^{®}103, Dispurez^{®}201 (all Incorez), Aptalon W8060, Aptalon W8062, Aptalon M8100 (all Lubrizol).

Especially preferred are commercially available film forming agents with a glass transition temperature (Tg) of at least 80 °C, e.g. JONCRYL^{®} 90, JONCRYL^{®} 631, JONCRYL^{®} 1158, JONCRYL^{®} 1180, JONCRYL^{®} ECO 2189-E, JONCRYL^{®} 652, JONCRYL^{®} 665, JONCRYL^{®} 667, JONCRYL^{®} 668, JONCRYL^{®}ECO 675, JONCRYL^{®} 678, JONCRYL^{®} 680, JONCRYL^{®} 682, JONCRYL^{®} 8085, JONCRYL^{®} 8078, JONCRYL^{®} 8083, JONCRYL 8082, , JONCRYL^{®} 2038, , JONCRYL^{®}8060,JONCRYL^{®}8064, JONCRYL^{®}8067, JONCRYL^{®}2157, JONCRYL^{®}8055, JONCRYL^{®}LMV 7051, JONCRYL^{®}LMV 7025, JONCRYL^{®}DPS 3775 (all BASF SE), NeoCryl^{®} A-662, NeoCryl^{®} A-2091, NeoCryl^{®} BT-101 (all DSM), Takelac^{®}W-605, Takelac^{®}W-6010, Takelac^{®}W-6061, , Takelac^{®}W-5030, Takelac^{®}WS-4022, Takelac^{®}WS-5100, Takelac^{®}WS-4000 Takelac^{®}WPB-341, Takelac^{®}WPB-341A (all Mitsui Chemicals), Aptalon W8060, Aptalon W8062, Aptalon M8100 (all Lubrizol).

According to a further preferable embodiment of the ink, the usage of a film forming agent comprising one or more particulate (polymer dispersion or polymer emulsion) based on polyurethane, polyurethane-(meth)acrylate, polyamide-polyurethane copolymer, polyacrylate, in particular polystyrene (meth)acrylate and/or polystyrene (meth)acrylic copolymer, in combination with at least one polyether modified (poly)siloxane as surfactant is especially advantageous for excellent stability of the static surface tension of the ink under storage at 40°C for 1 month (0,1 mN/m < |σ₁-σ₃₀| < 2,5 mN/m as measured at 25 °C).

According to a further preferable embodiment of the ink, high heat abrasion resistance of the ink for the in-line digital printing application in the corrugator or within the corrugated board production line can be achieved when the film forming agent is based on polyamide polyurethane copolymer and/or polyurethane and/or polyacrylate, in particular polystyrene (meth)acrylate and/or polystyrene (meth)acrylic copolymer, preferably with very high hardness and toughness as wells as high abrasion and chemical resistance. Preferably, the glass transition temperature Tg of the polyamide polyurethane and/or polyurethane and/or polyacrylate, in particular polystyrene (meth)acrylate and/or polystyrene (meth)acrylic copolymer, is at least 80 °C, more preferably at least 90 °C and most preferably at least 100°C. Preferably, the Young modulus of said polyamide polyurethane and/or polyurethane and/or polyacrylate, in particular polystyrene (meth)acrylate and/or polystyrene (meth)acrylic copolymer, is at least 2 GPa, more preferably at least 3 GPa and/or the nano hardness is at least 0.08, preferably at least 0.1 GPa. Polyamide polyurethanes and/or polyurethanes and/or polyacrylate, in particular polystyrene (meth)acrylate and/or polystyrene (meth)acrylic copolymer, which fulfil at least one of the properties as described above have sufficient hardness and toughness to achieve high heat abrasion resistance. Such compounds are available on the market, for example, under the trade names Takelac WPB-341 (Mitsui Chemicals), Sancure 20041 (Lubrizol), Dispurez 103 (Incorez), Aptalon W8060, Aptalon W8062, Aptalon M8100 (all Lubrizol), to name a few without any limitation.

[Emulsifier] The emulsifier is a special type of surfactant and is to be understood as a surfactant with a low impact on the static surface tension of the ink while improving the solubilisation of the dispersed phase in the ink. In certain embodiments, the emulsifier leads to a change of the static surface tension of the ink of less than 2 mN/m (as measured at 25 °C) at a concentration of 4 wt% (with respect to the total ink) as compared to an ink that is free of any other surfactant or any other emulsifier; in other words, an emulsifier is surfactant with a smaller impact on the static surface tension of the ink as compared to other surfactants, such as (poly)siloxane surfactants. Yet, in other embodiments, the emulsifier leads to a change of the static surface tension of the ink of less than 1 mN/m (as measured at 25 °C) at a concentration of 0.8 wt% (with respect to the total ink) as compared to an ink that is free of any other surfactant or any other emulsifier.

An emulsifier may be present in the ink composition or the coating compositions described herein, preferably in a concentration range from 0.1 to 10 wt%, preferably from 1 to 5 wt.% and more preferably from 2 to 4 % with respect to the total ink. According to a further embodiment, addition of one or more emulsifiers with a HLB value of at least 12, preferably at least 13 and even more preferably at least 14 to the ink has an advantageous effect on the open time/start-up performance of said ink. The addition of at least one emulsifier as described above turned out to be particularly advantageous in cases where film forming agents based on polyamide polyurethane and/or polyurethane and/or polyacrylate, in particular polystyrene (meth)acrylate and/or polystyrene (meth)acrylic copolymer, were employed. An advantageous effect on the open time/start-up performance of said ink was observed. The weight ratio of the emulsifier(s) to the film forming agent to improve the desired properties is preferably from 0.01 to 2.0, more preferably 0.10 to 1.50 and even more preferably 0.15 to 1.0. Additionally, when said emulsifier is present in the ink formulation, the compatibility and/or solubility of the film forming agents with the ink vehicle is increased, which also ultimately improves the open-time/start up behaviour of the ink. At the same time, or alternatively thereto, the heat abrasion resistance of said inks is improved. Said effect was particularly pronounced in case polyamide polyurethanes and/or polyurethanes and/or polyamides and/or and/or poly(meth)acrylates, in particular polystyrene (meth)acrylates and/or polystyrene (meth)acrylic copolymers, were employed as film forming agents. Also, the emulsifier turned to be highly beneficial, in case an ink formulation with low content of humectants, such as polyols, glycols and ethers thereof is desired as good open-time/start up behaviours of such inks could be achieved, in particular if the emulsifier is an emulsifier as defined in the following.

According to a further preferred embodiment, the emulsifier of the ink or coating composition (if present) is a non-ionic emulsifier, more preferably a poly(alk)oxylated, non-ionic emulsifier and even more preferably a non-ionic, poly(alk)oxylated sorbitan and most preferably a non-ionic, fatty acid ester of poly(alk)oxylated sorbitan or a derivative thereof. Non-ionic emulsifiers based on esters of ethoxylated sorbitan with fatty acids are particularly preferred. Commercially available examples of such emulsifiers are Tween 20, Tween 40, Tween 60, Tween 65 and Tween 80 (all MERCK), Lucramul WT 100 (LEVACO). It was found that a combination these emulsifiers with a film forming agent, preferably a polyurethane, a polyamide-polyurethane, a polyacrylate, in particular a polystyrene (meth)acrylates and/or polystyrene (meth)acrylic copolymer and mixtures thereof, was particularly suitable to improve the open time/start-up performance of the ink.

According to the further particular preferable embodiment, the ink or the coating composition comprises at least two, preferably at least three types of the following four types of surfactants (wt% is understood to be with respect to the total weight of the ink or the coating composition):
- one or more polyether modified (poly)siloxane surfactants, preferably in a concentration range from 0.05 to 2 wt.%, more preferably from 0.05 to 0.5 wt.%, even more preferably from 0.1 to 0.4 wt.%; e.g.: 0.2 to 1.0 wt%, in particular 0.8 wt%,
- one or more alcohol alkoxylate surfactants, preferably in a concentration range from 0.05 to 3 wt.%, more preferably from 0.05 to 1.5 wt.%, and even more preferably from 0.1 to 1 wt.%,
- one or more emulsifiers, preferably in a concentration range from 0.1 to 10 wt%, preferably from 1 to 5 wt.% and more preferably from 2 to 4 %, wherein preferably the emulsifier is a non-ionic emulsifier, more preferably a non-ionic, poly(alk)oxylated sorbitan and most preferably a non-ionic, fatty acid ester of poly(alk)oxylated sorbitan or a derivative thereof,
- one or more non-ionic surfactants other than the emulsifier with a HLB value of at least 3, preferably of at least 6, more preferably of at least 9, even more preferably of at least 12, wherein the total concentration of such surfactant in the aqueous ink is from 0.01 to 5 wt.%, preferably 0.1 to 3 wt%, more preferably 0.1 to 1.0 wt%, e.g. 0.1 to 0.5 wt%, wherein preferably such surfactant is poly(alk)oxylated surfactant.

According to a particularly preferred embodiment, the ink or the coating composition comprises (wt% is understood to be with respect to the total weight of the ink or the coating composition):
- one or more polyether modified (poly)siloxane surfactants, preferably in a concentration range from 0.05 to 2 wt.%, more preferably from 0.05 to 0.5 wt.%, even more preferably from 0.1 to 0.4 wt.%; e.g.: 0.2 to 1.0 wt%, in particular 0.8 wt%,
- one or more emulsifiers, preferably in a concentration range from 0.1 to 10 wt%, preferably from 1 to 5 wt.% and more preferably from 2 to 4 %, wherein preferably the emulsifier is a non-ionic emulsifier, more preferably more preferably a non-ionic, poly(alk)oxylated sorbitan and most preferably a non-ionic, fatty acid ester of poly(alk)oxylated sorbitan or a derivative thereof, and/or
- one or more non-ionic surfactants other than the emulsifier with a HLB value of at least 3, preferably of at least 6, more preferably of at least 9, even more preferably of at least 12, wherein the total concentration of such surfactant in the aqueous ink or coating composition is from 0.01 to 5 wt.%, preferably 0.1 to 3 wt%, more preferably 0.1 to 1.0 wt%, e.g. 0.1 to 0.5 wt%, wherein preferably such surfactant is poly(alk)oxylated surfactant.

[Plasticizer] According to a preferred embodiment, the ink or the coating composition further contains one or more plasticizers, preferably in concentration from 0.1 to 5 wt%, preferably from 0.5 to 4 wt%, more preferably from 0.8 to 3 wt% and most preferably from 1.2 to 2.5 wt%, e.g. 2 wt% with respect to the total weight of the ink or coating composition. Preferably, said one or more plasticizer comprises a polypropylene glycol alkylphenylether based plasticizer. The plasticizer may improve the printability and/or the start up effect of the ink and or coating composition. Commercially available examples of suitable plasticizers are Loxanol PL 5060 (BASF) - polypropylene glycol alkylphenylether; 2-phenoxyethanol (MERCK); Loxanol CA5086 (BASF), Loxanol CA5310 (BASF); Loxanol OT 5840 (BASF).

[Additives] Inks and/or coating compositions may further comprise biocides for effective suppressing of bacterial growth, defoaming agents for suppressing of air trapping and foam development, rheology agents, for example thickening agents for adjusting the viscosity to the desired viscosity level, as different industrial print-heads or coating application devices are operating within a specified physical properties window, chelating agents, adhesion promoters, solvents and other additives as known by a person skilled in the art upon having the benefit of the present disclosure. According to a preferred embodiment, the ink or the coating composition further comprises one or more biocides, preferably in concentration from 0.1 to 5 wt%, preferably from 0.1 to 4 wt%, more preferably from 0.1 to 2 wt% and most preferably from 0.1 to 1.0 wt%, e.g. 0.1 to 0.5 wt% with respect to the total weight of the ink or coating composition.

In contrast to aqueous inkjet inks according to the state of the art, which are known to cause complications like open-time/start-up issues, permanent or temporary nozzle drop out caused by air trapping in the nozzle due to ink foaming or ink drying at the nozzle orifice, poor image quality and low image density, inks as described herein reduce these particular issues. This allows the usage of disclosed aqueous inkjet ink formulations even in high-end single-pass printing applications at high printing speeds of up to 300- 450 m/min, more preferably 300-400 m/min and in inline printing applications in a corrugator or within a corrugated board production line.

### CHARACTERIZATION OF INKS, COATING COMPOSITIONS AND COMPONENTS

[Open time (start-up) behaviour] The image file to observe the effect on open time/start up behaviour of the ink should be chosen as follows:
An image with a low optical density of color visualizes the effect stronger than one with higher optical density. For that test an image with 10% optical density is preferred. 100% refers to an image where all nozzles are jetting at every pulse of the set waveform, whereas 10% means that only 1 out of 10 pulses is used for jetting (so the complete amount of ink (or drops) is also 1/10). The amplitude of the wave is set to reach a drop-size of 8 pL preferably, which can be checked by printing a defined amount of drops, weighing the printed fluid, and calculating the mass for a single drop.

The open time/start up behaviour is judged by the following test:
An image is printed with 10% optical density and the printer is left idle for specified period of time (1, 5, 10, 20, 40 min) without applying pulses to the piezo head or purging ink through the head. After this specified idle time, an image is printed with 10% optical density again. The very first printed lines of the second image are then compared with the very last printed lines of the first image (printed before the specified idle time).

An ink without visible open time/start up issues has no visual difference (either by eye or pocket microscope with 10 times magnification) between the two images relating to the edge sharpness and/or density in the first lines of drops, as well as on the rest of the image, the open time is considered as good.

If there is a significant visual difference between the first and second image, in particular between the very last lines of the first image and the very first lines of the second image, the open time is considered as poor. Such a significant visual difference may be for example:
- the first lines of drops are missing or appearing with delay on the second image printed after the specified idle time and/or
- the position of the first lines of drops of the second image deviates from their position on the first image before the specified idle time, resulting in deviated drop positioning and/or
- the optical density of the second image decreases/changes as compared to the first image and/or
- the second image is only partially printed or not even printed at all.
The open time/start-up behaviour is reported by the following gradation: 1 (very poor), 2 (poor), 3 (OK), 4 (good), 5 (very good):

| Idle time until appearance of significant visual difference(s) between the first and second image | Gradation |
|---|---|
| < 1 min | 1 |
| < 5 min | 2 |
| < 10 min | 3 |
| < 20 min | 4 |
| ≥ 20 min | 5 |

[Viscosity] The viscosity of the ink or the coating composition is determined at 35°C (mimics the operating temperature of common industrial printers) by rotational viscometer Brookfield DV2T extra with UL adapter equipped with water jacket for precise temperature control connected with the forced temperature control bath.

[Nano hardness / Young modulus] The nano hardness as well as the Young modulus of a film forming agent were determined by nano indentation measurements. The measurements were performed using a MTS Nanoindenter XP based on DIN ISO 14577-1 (202), in particular version 2015-11, at room temperature (25 °C) using an indentation depth controlled method (indentation depth maximum 10% of the film thickness but not more than 3 µm)).

Sample preparation: A mixture of the film forming agent dispersion (7,5-9 ml) with monoethylene glycol (1 ml) as coalescent agent and optionally distilled water (0-1,5 ml) and one drop of wetting agent BYK 349 were mixed thoroughly in a container for 20 min. The concentration of the film forming agent was chosen to obtain a concentration of 28-35 wt.% of the film forming agent in the final mixture.

For example: In case a film forming agent that is supplied as aqueous dispersion with 48 wt.% of the film forming agent, 8 g of the film forming agent aqueous dispersion was mixed with 1 g of monoethylene glycol and 1 g of water and 1 drop of BYK 349. This final mixture has a concentration of 38,4 wt.% of film forming agent. By applying a 80 µm wet film layer, a dry film with a thickness of approximately 31 µm will be formed (80 x 0,384 = 30,72 ≈ 31 µm).

Glass plates of 2 mm thickness were cleaned with soap solution and flushed with isopropyl alcohol. Then a coating of the film forming agent was applied onto the prepared glass plate by draw-down technique using a film applicator with a wet film thickness of 80-120 µm. Subsequently the wet samples were transferred into a drying oven for film forming at 130°C for 15 min. The drying oven has to be levelled in order to guarantee a uniform wet film spreading over the substrate.

After drying and cooling of the glass plates of at least 16 hrs the test specimens (2 cm x 2 cm) were cut using a glass cutter and subjected to the nano indentation measurements.

[Glass transition temperature (Tg)] The glass transition temperature (Tg) of a material is determined by differential scanning calorimetry (DSC) measurements with a heating and cooling rate of 20 K/min. Tg is determined as the point of inflection of the endothermal step.

[Acid value (AV)] The acid value (AV) is determined according to ONORM EN ISO 2114: 2002 05 01, yet with the difference that a mixture of 28 parts by weight of acetone and 1 part by weight of pyridine is used as solvent.

[Weight average molecular weight (Mw)] The weight average molecular weight (Mw) is determined by gel permeation chromatography. As an eluent, chloroform (for (semi)crystalline compounds) or tetrahydrofurane (THF) (for amorphous compounds) is used, at a flow rate of 1 ml/min. Calibration of the separation columns (three columns of 8 mm χ 300 mm each, PSS SDV, 5 pm, 100, 1000 and 100000 A) was done by narrowly distributed polystyrene standards, and detection via refractive index detector

[Static surface tension] The static surface tension is determined at 25°C using a KRUSS Processor-Tensiometer K100MK2 and a plate method, in particular according to DIN-EN-14370-2004-11.

[Long-term stability of physical-chemical properties] In order to monitor the long-term stability of the ink's or coating composition's physical-chemical properties, the samples are stored in a drying cabinet at 40 °C for 30 days and the viscosity (measured at 35 °C) and static surface tension (measured at 25 °C) of the sample is being measured right after production and after 30 days. σ₁ - corresponds to the static surface tension after production and σ₃₀ - to the ink static surface tension after storage at 40°C for 30 days.

[Dynamic surface tension] The dynamic surface tension is determined at 25°C at a frequency of 10 Hz using a Sita Science Line T100 laboratory tensiometer by using a bubble pressure method. The measurement of ink or coating composition dynamic surface tension was carried out in a bubble lifetime range starting from 15 ms up to 6000 ms.

[Film forming agent filtration characteristic] Method 1: The filtration characteristics were evaluated as follows: 60 mL of a film forming agent based composition comprising the film forming agent of interest at its concentration in the ink, one or more polyols at their concentration in the ink and water as balance were filled into a 60 mL syringe (Terumo 60 CC, Luer lock Tip) and a 1 micrometer glass fiber disc filter (PureFlo 25 mm disc filter, D25CG010LMLF, Saint Gobain) was connected over the male Luer lock inlet to the syringe comprising said composition. The composition was pressed manually through the filter at room temperature (25 °C) without significant force applied. In case a film forming agent displays suitable filtration characteristics, the testing composition as described above will completely (> 90 %) pass through the filter without any blocking of said filter. An unsuitable/inappropriate film forming agent will be characterized in fast blocking of the filter (< 20 % throughput). A film forming agent of intermediate suitability will only partially pass through the filter (20-90 %) before the filter gets blocked.

Method 2:The filtration characteristics were evaluated as follows: 400 mL of a film forming agent based composition comprising the film forming agent of interest at 4 % solids, one or more polyols at their concentration in the ink and water as balance were filled into a 100 mL syringe (BD Plastipac 100 CC, Luer lock Tip) and a 1 micrometer glass fiber disc filter (PureFlo 25 mm disc filter, D25CG010LMLF, Saint Gobain) was connected over the Male Luer Lock inlet to the syringe comprising said composition. The composition was pressed manually through the filter at room temperature (25 °C) without significant force applied. The procedure was continued until either all the composition was filtered or the filter got blocked. In case a film forming agent displays excellent filtration characteristics, the testing composition as described above will to a large extent (> 70 %) pass through the filter said filter. An unsuitable/inappropriate film forming agent with poor filtration characteristics will be characterized in fast blocking of the filter (< 20 % throughput). A film forming agent of intermediate suitability with good filtration characteristics will partially pass through the filter (20-70 % throughput) before the filter gets blocked.

In principle both Method 1 and Method 2 may be employed to determine the filtration characteristics of a film forming agent, but Method 2 is being used preferably as due to the higher amount of test liquid (60 mL in Method 1 vs 400 mL in Method 2) the different filtration characteristics of the film forming agents become more evident and may be better assessed.

[HLB value] Herein, the term "HLB value" relates to the HLB value calculated according to the method of Griffin, as e.g. set forth in Griffin, William C. "Classification of surface-active agents by" HLB"." J. Soc. Cosmet. Chem. 1 (1949): 311-326.

[Transparent] Transparency is the physical property of allowing light to pass through a material without appreciable scattering of light. Consequently, a transparent overcoat intends to refer to a coating layer that has sufficient transparency to visually recognize layer(s) and/or substrate(s) underneath (with the naked eye), in particular a printed substrate, preferably at a thickness of said transparent overcoat from 0.50 µm to 20 µm.

### [z-average diameter]

The z-average diameter as defined in ISO 22412-2017 is determined by the cumulants method and yields a scattered light intensity-weighted harmonic mean particle diameter.

The z-average diameter was determined using a Malvern Zeta Sizer NanoZS apparatus (Malvern Panalytical, UK) according to ISO 22412-2017 upon following the instructions of the user manual. For example: The dispersion of colloidal silica (1 part Levasil CC301 + 9 parts of water) was filled into a 10 mm disposable sizing cuvette. The measurement was performed at 25°C at 1 atm. Following parameter and materials were used during the measurements:
- material refractive index for silica - 1.48
- material absorption - 0.000
- dispersant - water
- dispersant refractive index - 1.330
- viscosity of dispersant - 0.891 cP
- duration: 150 seconds
- measurement position 4.65 mm
- attenuator: 8
- count rate: 402.4 kcps

Thus measured Levasil CC301 silica colloidal dispersion has a z-average particle diameter of 13 nm (with polydispersity index of 0.525).

### [Chroma] (color saturation)

The chroma values of the printed field (underlying ink) is measured using X-Rite i1 Pro Rev E equipment (X-Rite, Switzerland) by placing the instrument over the printed colour patch. The chroma value is calculated by the software of the X-Rite i1 instrument from the Lab values as C-value.

### MANUFACTURE

[Pigment concentrate] In a preferred embodiment, the pigment concentrate as described herein is produced by bringing together the corresponding materials via mixing, blending, stirring or other methods suitable for producing homogenous mixtures followed by wet milling of the mixture for pigment de-agglomeration, dispersing, grinding and stabilization via action of the pigment dispersing agent and the non-ionic surfactant with high HLB value of at least 12, preferably at least 15 and more preferably at least 17 by using zirconia beads of suitable diameter (0.1-1.0 mm). However, also other methods as known the art may be employed to manufacture the pigment concentrate as described herein.

[Ink] In a preferred embodiment, the (aqueous inkjet) inks are produced by bringing together the corresponding materials via mixing, blending, stirring, milling and other methods suitable for producing homogenous mixtures. First, the compounds of the pigment concentrate carrying liquid are blended together for a short time (e.g. 30 min) in a container and then the corresponding amount of pigment concentrate is added slowly under continuous stirring in order to prevent a so called pigment shock (destabilisation of the pigment concentrate leading to the appearance of coarse particles in the ink). After addition of pigment concentrate the mixture is stirred for 1 hour and then filtered through depth filters with different mesh sizes (e.g. 5.0 to 1.0, 0.8, 0.5 µm) as known by a person skilled in the art.

### [Coating composition]

In a preferred embodiment, the coating composition is produced by bringing together the corresponding materials via mixing, blending, stirring and/or other methods suitable for producing homogenous mixtures. First, the compounds of the coating composition may be blended together for a short time (e.g. 15 min). After blending of the coating composition components the mixture may be stirred for e.g. 0.5 hours and then filtered through depth filters with different mesh sizes (e.g. 5.0 to 1.0, 0.8, 0.5 µm) as known by a person skilled in the art.

### PRINTING

The ink can be applied not only by using multi-pass inkjet printers but especially also by using single-pass inkjet printers onto paper or coated paper substrates followed by drying and/or curing of the ink using infra-red (short infra-red, middle infra-red or far infra-red) irradiation and/or convection drying for removal of volatile parts of the ink. The inks can also be successfully digitally applied onto the surface of other substrates than paper or coated paper followed by drying of the ink using infra-red (short infra-red, middle infra-red or far infra-red) irradiation and/or convection drying for removal of volatile parts of the ink.

The ink can also be successfully applied onto the surface of any before mentioned substrate which may have been pre-coated, pre-modified, pre-treated with a solution, mixture, and/or dispersion, physically pre-treated with corona discharge and/or plasma pre-treated and/or flamed. The pre-treatment solutions, mixtures, dispersions are controlling the ink spreading and absorption on the substrate surface and are generally known in the art. Typically, these comprise substances such as polyvalent cations, oxides and/or salts (with organic or inorganic anions) of polyvalent metals and/or non-metals, polymeric compounds with high charge density like polymeric polyamine, polyethylene imine and/or cationic flocculating compounds without any limitation to these compounds.

### OVERCOATING

The coating composition can be applied not only by using multi-pass inkjet printers but especially also by using single-pass inkjet printers onto suitable substrates such as paper or coated paper substrates. This may be followed by drying and/or curing of the coating composition using infra-red (short infra-red, middle infra-red or far infra-red) irradiation and/or convection drying for removal of volatile parts of the coating composition. The coating composition can also be successfully digitally applied onto the printed surface (and, of course, non-printed parts thereof) of other substrates than paper or coated paper followed by drying of the coating composition using infra-red (short infra-red, middle infra-red or far infra-red) irradiation and/or convection drying for removal of volatile parts of the coating composition.

The coating composition can also be successfully applied onto the (printed) surface of any before mentioned substrate which may have been pre-coated, pre-modified, pre-treated with a solution, mixture, and/or dispersion, physically pre-treated with corona discharge and/or plasma pre-treated and/or flamed. The pre-treatment solutions, mixtures, dispersions are controlling the composition spreading and absorption on the substrate surface and are generally known in the art. Typically, these comprise substances such as polyvalent cations, oxides and/or salts (with organic or inorganic anions) of polyvalent metals and/or non-metals, polymeric compounds with high charge density like polymeric polyamine, polyethylene imine and/or cationic flocculating compounds without any limitation to these compounds.

The coating composition can also be successfully applied onto the surface of any before mentioned substrate (i.e. onto at least a portion of the area on which at least one ink has been printed, e.g. as disclosed herein) which may have been pre-coated, pre-modified, pre-treated with a solution, mixture and/or dispersion, physically pre-treated with corona discharge and/or plasma pre-treated and/or flamed. The substrate may then even be further over coated, over printed, digitally or analogously by a digital or an analogous overprint varnish, for improved water fastness, rub fastness, heat abrasion resistance, increased gloss or matt finish effects, partial coverage with said digital or analogue overprint varnish for highlighting selected image areas and the like.

The coating composition may also be applied by means of roller coater, screen printing, flexo printing, gravure printing, offset printing, etc or other methods that are known in the art for the application of liquid coating compositions.

### [Overcoat]

According to a preferred embodiment, the overcoat obtained by the overcoating has an average thickness from 0.5 µm to 20 µm, preferably from 1 µm to 15 µm. In another preferred embodiment, the total amount of applied coating composition is from 0.5 g/m² to 50 g/m², more preferably from 1 g/m² to 30 g/m² and even more preferably to 1 g/m² to 20 g/m² and most preferably from 5 to 15 g/m² (such as 6 or 7 or 8, or 9, or 10 or 11, or 12, or 13, or 14 g/m²). With substrates and inks tested in the course of the present invention, this has turned out to be especially beneficial for increasing heat abrasion resistance, while excellent optical properties (of the print) were still be observed.

### FURTHER EMBODIMENTS OF THE INVENTION

The present invention further relates to the following embodiments:
Embodiment 1. A method for overcoating a printed substrate, the method comprising the following steps:
   - providing the substrate, wherein the substrate has an area on which at least one ink has been printed, preferably by inkjet printing; and
   - overcoating at least a portion of the area with a coating composition, the composition having a continuous aqueous phase and a solid phase comprising inorganic nanoparticles dispersed through the continuous aqueous phase,
      wherein the z-average diameter of the inorganic nanoparticles (as determined by dynamic light scattering (DLS), in particular according to ISO 22412:2017) is 1 nm to 100 nm, more preferably 1 nm to 50 nm, yet more preferably 1 nm to 20 nm, even more preferably 1 nm to 15, especially 1 nm to 10 nm,
      wherein the mass fraction of the inorganic nanoparticles within the coating composition is more than 5%, preferably more than 10%, more preferably more than 10.5%, yet more preferably more than 11%, even more preferably more than 11.5%, yet even more preferably more than 12% or even more than 13%, especially more than 14% or more than 15%.
Embodiment 2. The method of embodiment 1, wherein the melting point of the inorganic nanoparticles at 1 atm is above 500°C, preferably above 750°C, more preferably above 1000°C, even more preferably above 1250°C, especially above 1500°C.
Embodiment 3. The method of embodiment 1 or 2, wherein the substrate is paper, a corrugated board or a liner for the production of corrugated board.
Embodiment 4. The method of any one of embodiments 1 to 3, wherein the overcoating is performed in a corrugator or within a corrugated board production line, preferably wherein said overcoating occurs in-line.
Embodiment 5. The method of any one of embodiments 1 to 4, wherein the overcoating comprises printing, preferably inkjet printing, and even more preferably single-pass inkjet printing, the coating composition onto said portion of the area.
Embodiment 6. The method of any one of embodiments 1 to 5, wherein the inorganic nanoparticles comprise a metal, metal salt and/or a metal oxide, preferably a metal oxide wherein the metal of the metal oxide is selected from the group consisting of aluminum, calcium, magnesium, titanium, zirconium, zinc, silicon and combinations thereof.
Embodiment 7. The method of any one of embodiments 1 to 6, wherein the inorganic nanoparticles comprise silica, alumina and/or hydroxyapatite, preferably silica.
Embodiment 8. The method of any one of embodiments 1 to 7, wherein the aqueous phase of the coating composition comprises a humectant, preferably selected from monoalcohols, polyols, glycols, ethers thereof, urea, modified urea and combinations thereof, more preferably selected from modified urea.
Embodiment 9. The method of any one of embodiments 1 to 8, wherein the solid phase of the coating composition further comprises a wax or a thermoplastic material, dispersed through the continuous aqueous phase, preferably
   i) wherein the wax or thermoplastic material has a melting temperature ranging from 40°C to 250°C, and/or
   ii) wherein the wax or thermoplastic material is selected from the group consisting of a beeswax, a carnauba wax, a candelilla wax, a montan wax, a Fischer-Tropsch wax, a polyethylene-based wax, a high density polyethylene-based wax, a polybutene-based wax, a paraffin-based wax, a polytetrafluoroethylene-based material, a polyamide-based material, a polypropylene-based wax, and combinations thereof, particularly preferably a polypropylene-based wax, a polyethylene-based wax, a polytetrafluoroethylene-based material and combinations thereof.
Embodiment 10. The method of any one of embodiments 1 to 9, wherein the coating composition comprises one or more surfactants, preferably in a concentration range from 0.05 wt.% to 5 wt.% with respect to the total weight of the coating composition.
Embodiment 11. The method of embodiment 10, wherein the one or more surfactants are selected from the group consisting of
   - (poly)siloxane surfactants, more preferably polyether-modified (poly)siloxane - surfactants, in particular polyethoxylated poly(siloxane) surfactants;
   - alcohol alkoxylate surfactants;
   - surfactants with an HLB value of at least 7, preferably at least 10, more preferably at least 12;
   - copolymers of polypropylene oxide and polyethylene oxide
   - ethoxylated fluorosurfactant,
   - octylphenolethoxylate - based surfactants
   and mixtures thereof.
Embodiment 12. The method of any one of embodiments 1 to 11, wherein the coating composition is free of any color pigments.
Embodiment 13. The method of embodiments 1 to 12, wherein the overcoat obtained by the overcoating has a mean thickness from 0.5 µm to 20 µm, preferably from 1 µm to 15 µm; and/or the overcoat obtained by the overcoating is such that the at least one ink printed on the area is still visible, for the entirety of the area; and/or the total amount of applied overcoating composition is from 0.5 to 50 g/m², more preferably from 1 to 30 g/m² and even more preferably from 1 to 20 g/m² and most preferably from 5 to 15 g/ₘ².
Embodiment 14. The method of any one of embodiments 1 to 13, wherein the coating composition is free of film forming agents.
Embodiment 15. The method of any one of embodiments 1 to 14, wherein the at least one ink comprises an aqueous ink, preferably an aqueous inkjet ink, especially a cyan (C) inkjet ink, a magenta (M) inkjet ink, a yellow (Y) inkjet ink and/or a black (K) inkjet ink.
Embodiment 16. The method of embodiment 15, wherein the aqueous ink comprises one or more film forming agents, wherein the total film forming agent concentration in the aqueous ink is from 0.1 to 30 wt.%;
   wherein the one or more film forming agents fulfil at least one of the following properties:
      i) a Young modulus of at least 2 GPa, and
      ii) a nano hardness of at least 0.08 GPa, and/or
   wherein the ink further comprises one or more emulsifiers, wherein the one or more emulsifiers are fatty acid esters of polyalkoxylated sorbitan.
Embodiment 17. The method of embodiment 15 or 16, wherein the aqueous ink is characterised in that the one or more film forming agents have a glass transition temperature Tg of least 80 °C, more preferably at least 90°C, especially at least 100°C. Embodiment 18. The method of any one of embodiments 15 to 17, characterised in that the ink further comprises one or more surfactants selected from
   - (poly)siloxane surfactants,
   - alcohol alkoxylate surfactants,
   - high hydrophilic-lipophilic balance (HLB) value surfactants with an HLB value of at least 12
   - diol (i.e. dihydroxyl) surfactants
   and mixtures thereof.
Embodiment 19. The method of embodiment 18, characterised in that the one or more surfactants comprise at least two different (poly)siloxane surfactants, wherein preferably at least one, more preferably at least two of these (poly)siloxane surfactants are polyether-modified (poly)siloxane surfactants, in particular polyethoxylated poly(siloxane) surfactants.
Embodiment 20. The method of any one of embodiments 15 to 19, characterised in that the ink comprises less than 20 wt%, more preferably less than 10 wt%, yet more preferably less than 8 wt%, even morepreferably less than 6 wt% and most preferably less than 3.5 wt% of humectants with respect to the total weight of the ink.
Embodiment 21. The method of any one of embodiments 15 to 20, characterised in that the ink further comprises one or more polyols with at least 2 hydroxyl groups, preferably glycols, and/or one or more polyol ethers, preferably glycol ethers; wherein their total concentration in the aqueous ink is from 0.1 to 30 wt.%, preferably less than 20 wt%, more preferably less than 10 wt%, yet more preferably less than 8 wt%, even more preferably less than 6 wt% and most preferably less than 3.5 wt%.
Embodiment 22. The method of any one of embodiments 15 to 21, characterised in that the one or more film forming agents comprise one or more film forming agents selected from polyurethanes, polyacrylates, in particular polystyrene-(meth)acrylates or polystyrene (meth)acrylic copolymers, polyesters, polyamide-polyurethane copolymers, polyurethane-(meth)acrylates, polyamides and mixtures thereof.
Embodiment 23. The method of any one of embodiments 15 to 22, characterised in that the one or more film forming agents comprise one or more film forming agents selected from polyurethanes, polyamide-polyurethane copolymers, polyacrylates, in particular polystyrene-(meth)acrylates or polystyrene (meth)acrylic copolymers, and mixtures thereof.
Embodiment 24. The method of any one of embodiments 15 to 23, characterised in that the weight ratio of the one or more emulsifiers to the one or more film forming agents in the ink is from 0.01 to 2.0.
Embodiment 25. The method of any one of embodiments 15 to 24, characterised in that the aqueous ink additionally comprises one or more surfactants, wherein the total surfactant concentration in the aqueous ink is from 0.05 to 5 wt.%.
Embodiment 26. The method of any one of embodiments 15 to 25, characterised in that the aqueous ink has a Brookfield viscosity of more than 3 mPa s measured at 35°C and/or in that the aqueous ink has a static surface tension from 21 to 45 mN/m measured at 25°C.
Embodiment 27. The method of any one of embodiments 15 to 26, characterised in that the aqueous ink further comprises one or more sugar alcohols and/or saccharides, wherein their total concentration in the aqueous ink is from 0.1 to 10 wt.%; and/or in that the aqueous ink further comprises one or more plasticizers, wherein the total plasticizer concentration in the aqueous ink is from 0.1 to 5 wt.%, preferably wherein the one or more plasticizers comprise a polypropylene glycol alkylphenylether.
Embodiment 28. The method of any one of embodiments 15 to 27, characterised in that the ink comprises an aqueous pigment concentrate comprising
   - one or more pigments, preferably wherein the total pigment concentration in the aqueous pigment concentrate is from 5 to 40 wt.%, especially wherein the one or more pigments comprise an organic pigment,
   - one or more pigment dispersing agents, preferably wherein the total pigment dispersing agent concentration in the aqueous pigment concentrate is from 0.5 to 10 wt.%, especially from 0.5 to 5 wt.%,
   - one or more non-ionic surfactants with an HLB value of at least 12, preferably wherein the total concentration of non-ionic surfactants with an HLB value of at least 12 in the aqueous pigment concentrate is from 0.1 to 10 wt.%, especially wherein the one or more non-ionic surfactants with an HLB value of at least 12 comprise a polyalkoxylated surfactant, and/or
   - preferably water as balance.
Embodiment 29. The method of embodiment 28, wherein the ratio of said total non-ionic surfactant concentration to said total pigment dispersing agent concentration in the ink is 0.5 to 4.0, preferably 1.0 to 3.0.
Embodiment 30. The method of embodiment 28 or 29, wherein the one or more pigment dispersing agents comprise an organic polymer, the organic polymer having pigment affine groups and a weight average molecular weight Mw from 3000 Da to 70000 Da, more preferably wherein the pigment affine groups are acid groups, especially wherein the polymer has an acid value in the range of 5 to 300 mgKOH/g, preferably 5 to 250 mgKOH/g.
Embodiment 31. The method of any one of embodiments 28 to 30, wherein the one or more pigment dispersing agents comprise a pigment dispersing agent with a glass transition temperature Tg of 20 to 170°C or of at least 60 °C, preferably at least 70 °C and more preferably at least 80°C.
Embodiment 32. Use of the coating composition as defined in any one of embodiments 1 to 14 to increase the heat abrasion resistance of a printed area of a substrate, preferably paper, a corrugated board or a liner for the production of corrugated board, wherein at least one ink has been printed on the area, preferably by inkjet printing; preferably wherein the ink is an aqueous ink, preferably the aqueous ink as defined in any one of embodiments 15 to 31.
Embodiment 33. A set for printing on and overcoating a substrate (preferably paper, a corrugated board or a liner for the production of corrugated board), comprising at least
   - a container A comprising an aqueous ink, preferably the aqueous ink as defined in any one of embodiments 15 to 31, and
   - a container B comprising the coating composition as defined in any one of embodiments 1 to 14.
Embodiment 34. The set according to embodiment 33, comprising two or more containers A, wherein the two or more containers are selected from containers A1, A2, A3 and A4, wherein
   - container A1 comprises a cyan (C) ink;
   - container A2 comprises a magenta (M) ink;
   - container A3 comprises a yellow (Y) ink; and
   - container A4 comprises a black (K) ink.

### Examples

The following further examples are provided to further illustrate the invention and its benefits without any intention of limitation.

A commercially available SAMBA print head available from FUJIFILM Dimatrix was used for the printing and overcoating tests using Natural WKL Bright paper (MetsäBoard, Finland) with ink aggregating coating thereon and Rieger Top DC (Hamburger Rieger Containerboard, Germany) paper substrates. Both paper substrates are suitable for the production of corrugated board. The printed ink and the applied coating composition were each dried at 120 °C for 15 minutes in a convection oven.

For the ink aggregation coating any commercially available ink aggregation coatings can be used, e.g. ink aggregation coatings from Siegwerk, Germany, like for example the product TP. WB UNICOAT UCB.

Tests were performed with a yellow inkjet ink (Ink 1) according to Table 1. These tests, however, can also be successfully performed with inks comprising any one of pigment concentrates B1 to B3 disclosed in Table 1 of WO 2021/105441 A1 and/or any one of inks 1 to 10 disclosed in Table 2 of WO 2021/105441 A1.

**Table 1 - Yellow ink composition (Ink 1) for printing on a substrate**

| **Raw Material** | **Manufacturer** | **Short description** | **Ink 1 [g]** |
|---|---|---|---|
| Pro-Jet Yellow APD 4000 | FUJIFILM Imaging Colorants, Japan | Pigment concentrate based on PY74 | 24.0 |
| Joncryl DPS 3775 | BASF, Germany | Film forming agent (styrene-acrylic polymer emulsion) | 4.0 |
| | | Tg= 106-110°C | |
| | | Nano hardness:0.25 GPa | |
| | | Young Modulus:14.8 GPa | |
| Diethylene glycol | MERCK, Germany | Humectant, polyol | 1.5 |
| Tween 80 | MERCK, Germany | Emulsifier | 3.0 |
| Maltitol | MERCK, Germany | Polyol, sugar alcohol/saccharide | 0.9 |
| Sorbitol | MERCK, Germany | Polyol, sugar alcohol/saccharide | 0.07 |
| DP3H and >DP3H* | Roquette, France | Polyol | 0.73 |
| BYK LP-R 21675 | ALTANA, Germany | Rheology additive | 0.38 |
| Hydropalat WE 3220 | BASF; Germany | Surfactant, Organically modified polysiloxane | 0.8 |
| Surfynol 107L | Evonik, Austria | Non-ionic surfactant | 0.8 |
| Acticide B20 | Thor, Germany | biocide | 0.1 |
| Distilled water | | | 63.72 |
| | | | (i.e. up to 100.0) |
| Viscosity@35°C / mPa s | | | 4.1 |
| Static surface tension@25°C / mN/m (σ1) | | | 26.2 |
| Static surface tension@25°C after storage at 40°C for 30 days / mN/m (σ30) | | | 27.0 |
| Open time/start-up | | | 5 |
| Recirculability | | | Excellent |

Ink 1 is particularly suitable for printing a porous substrate, particularly paper, corrugated board or a liner for the production of corrugated board.

**Table 2 - Coating composition 1 (for overcoating)**

| **Raw material** | **Manufacturer** | **Short description** | **Amount in g** |
|---|---|---|---|
| Distilled water | | | 44.20 |
| Byketol PC (90% solids) | BYK-Chemie GmbH, Germany | Humectant, modified urea (polyol) | 5.00 |
| Levasil CC 301 (28% solids) | Nouryon Chemicals B.V., Netherlands | Inorganic particles, SiO2 colloid | 50.00 |
| BYK 348 (100% solids) | BYK-Chemie GmbH, Germany | Surfactant, polyether modified siloxane | 0.50 |
| Acticide SR2081 | Thor, Germany | biocide | 0.3 |
| | | TOTAL | 100.00 |

**Table 3 - Coating composition 2 (for overcoating)**

| **Raw material** | **Manufacturer** | **Short description** | **Amount in g** |
|---|---|---|---|
| Distilled water | | | 39.20 |
| Byketol PC (90% solids) | BYK-Chemie GmbH, Germany | Humectant, modified urea | 5.00 |
| Levasil CC 301 (28% solids) | Nouryon Chemicals B.V., Netherlands | Inorganic particles, SiO2 colloid | 50.00 |
| BYK 348 (100% solids) | BYK-Chemie GmbH, Germany | Surfactant, polyether modified siloxane | 0.50 |
| Ultralube E801 (46% solids) | CHT Chemie, Germany | HDPE/PTFE wax | 5.00 |
| Acticide SR2081 | Thor, Germany | biocide | 0.3 |
| | | TOTAL | 100.00 |

Both coating compositions 1 and 2 were suitable to be employed as coating compositions for overcoating in the inventive method and lead to improved heat abrasion resistance of a printed substrate, as shown in Tables 4 and 5 below.

**Table 4 - Heat abrasion resistance test on different substrates by overcoating printed Ink 1 (Table 1) with Coating composition 1 (Table 2)**

| Test-No. | | Ink aggregation coating | Overcoating (Coating composition 1) | Heat abrasion resistance | Observation |
|---|---|---|---|---|---|
| 1 | Ink on non-coated paper substrate* | - | - | 2 | Severe ink smearing |
| 2 | Ink on non-coated paper substrate* | + | - | 1 | Very heavy ink smearing |
| 3 | Ink on non-coated paper substrate* | - | + | 5 | No ink smear |
| 4 | Ink on non-coated paper substrate* | + | + | 5 | No ink smear |
| 5 | Ink on coated paper substrate** | - | - | 2 | Severe ink smearing |
| 6 | Ink on coated paper substrate** | - | + | 5 | No ink smear |

**Table 5 - Heat abrasion resistance test on different substrates by overcoating printed Ink 1 (Table 1) with Coating composition 2 (Table 3)**

| Test-No. | | Ink aggregation coating | Overcoating (Coating composition 2) | Heat abrasion resistance | Observation |
|---|---|---|---|---|---|
| 1 | Ink on non-coated paper substrate* | - | - | 2 | Severe ink smearing |
| 2 | Ink on non-coated paper substrate* | + | - | 2 | Severe ink smearing |
| 3 | Ink on non-coated paper substrate* | - | + | 5 | No ink smearing |
| 4 | Ink on non-coated paper substrate* | + | + | 5 | No ink smearing |
| 5 | Ink on coated paper substrate** | - | - | 2 | Severe ink smearing |
| 6 | Ink on coated paper substrate** | - | + | 5 | No ink smearing |

| | | | | | |
|---|---|---|---|---|---|
| Legend for Tables 4 and 5: * Non-coated paper substrate - Natural WKL Bright, MetsäBoard, Finland ** Coated Paper substrate - Rieger Top DC, Hamburger Rieger Containerboard, Germany "-" means that this coating is not present; whereas "+" means that this coating is present. For example: In test number 3, there is no ink aggregation coating but an overcoating. In test number 4, there is an ink aggregation coating and an overcoating. | | | | | |

Heat abrasion resistance rating:
1 means very heavy ink smearing (i.e. very poor result),
2 means severe ink smearing (i.e. poor result),
3 means ink smearing (i.e. acceptable result),
4 means little ink smearing (i.e. good result),
5 means no ink smearing (i.e. very good result).

Further, the influence of overcoating on the chroma (color saturation) of the underlying ink was tested. It was found that the chroma of the underlying ink is improved by overcoating with Coating composition 1. For example, the chroma of yellow Ink 1 (Table 1) printed on different paper substrates is increased by up to 32 % upon overcoating with Coating composition 1. The results are summarized in Table 6. The explanation of the table is found below.

To show the influence of overcoating on the chroma of the underlying ink (e.g. Ink 1), two layers of a coating composition according to present invention (e.g. Coating composition 1) were applied over the ink:
- "Chroma 20% field (1.6g/m²)" means that one layer of 1.6 g/m² of Ink 1, preferably by inkjet printing, was applied to the paper substrate.
- "Chroma 20% field (1.6g/m²) with 2*100% Cc1 (16g/m²)" means that one layer of 1.6 g/m² of Ink 1, preferably by inkjet printing, was applied to the paper substrate and additionally two layers of 8 g/m² of Coating composition 1 (overcoating) (in total 16 g/m²), preferably by inkjet printing, were applied over the ink.
- "Chroma 50% field (4.0g/m²)" means that only one layer of 4.0 g/m² of Ink 1, preferably by inkjet printing, was applied to the paper substrate.
- "Chroma 50% field (about 4.0g/ m²) with 2*100% Cc1 (about 16g/ m²)" means that one layer of 4.0 g/m² of Ink 1, preferably by inkjet printing, was applied to the paper substrate and additionally two layers of 8 g/m² of Coating composition 1 (overcoating) (in total 16 g/m²), preferably by inkjet printing, were applied over the ink.
- "Chroma 100% field (8.0g/ m²)" means that only one layer of 8.0 g/m² of Ink 1, preferably by inkjet printing, was applied to the paper substrate.
- "Chroma 100% field (8.0g/ m²) with 2*100% Cc1 (16g/ m²)" means that one layer of 8.0 g/m² of Ink 1, preferably by inkjet printing, was applied to the paper substrate and additionally two layers of 8.0 g/m² of Coating composition 1 (overcoating) (in total 16 g/m²), preferably by inkjet printing, were applied over the ink.

**Table 6 - Chroma tests. The ink used is Ink 1 from Table 1 and the overcoating used is Composition 1 from Table 2.**

| | **substr ate** | **Without over-coating** | **With overcoati ng (Coating composit ion 1)** | **Without over-coating** | **With overcoat ing (Coating composi tion 1)** | **Without over-coating** | **With overcoa ting (Coatin g composi tion 1)** |
|---|---|---|---|---|---|---|---|
| Ink 1 (Table 1) | paper | Chroma 20% field (1.6g/m²) | Chroma 20% field (1.6g/ m²) with 2*100% Ccl (16g/ m²) | Chroma 50% field (4.0g/ m²) | Chroma 50% field (4.0g/ m²) with 2*100% Ccl (16g/ m²) | Chroma 100% field (8.0g/ m²) | Chroma 100% filed (8.0g/ m²) with 2*100% Ccl (16g/ m²) |
| Yellow | Coated paper^{∗} | 39.5 | 52.4 **(+32%)** | 72.1 | 81.9 **(+13%)** | 87.7 | 98.3 **(+12%)** |

| | | | | | | | |
|---|---|---|---|---|---|---|---|
| *Coated paper by RiegerTop DC, Hamburger Rieger Containerboard, Germany | | | | | | | |

As Table 6 shows, all three measurements with overcoating show an improvement of the chroma of the underlying ink, especially field 20% with the lowest amount of ink, shows a significant improvement of + 32 %.

## Claims

1. A method for overcoating a printed substrate, the method comprising the following steps:
- providing the substrate, wherein the substrate has an area on which at least one ink has been printed, preferably by inkjet printing; and
- overcoating at least a portion of the area with a coating composition, the composition having a continuous aqueous phase and a solid phase comprising inorganic nanoparticles dispersed through the continuous aqueous phase,
wherein the z-average diameter of the inorganic nanoparticles is 1 nm to 100 nm, more preferably 1 nm to 50 nm, yet more preferably 1 nm to 20 nm, even more preferably 1 nm to 15, especially 1 nm to 10 nm,
wherein the mass fraction of the inorganic nanoparticles within the coating composition is more than 5%, preferably more than 10%, more preferably more than 10.5%, yet more preferably more than 11%, even more preferably more than 11.5%, yet even more preferably more than 12% or even more than 13%, especially more than 14% or more than 15%;
preferably wherein the substrate is paper, a corrugated board or a liner for the production of corrugated board.

2. The method of claim 1, wherein the overcoating is performed in a corrugator or within a corrugated board production line, preferably wherein said overcoating occurs in-line.

3. The method of claim 1 or 2, wherein the overcoating comprises printing, preferably inkjet printing, more preferably single pass inkjet printing, the coating composition onto said portion of the area.

4. The method of any one of claims 1 to 3, wherein the inorganic nanoparticles comprise a metal, metal salt and/or a metal oxide, preferably a metal oxide wherein the metal of the metal oxide is selected from the group consisting of aluminum, calcium, magnesium, titanium, zirconium, zinc, silicon and combinations thereof.

5. The method of any one of claims 1 to 4, wherein the inorganic nanoparticles comprise silica, alumina and/or hydroxyapatite, preferably silica.

6. The method of any one of claims 1 to 5, wherein the aqueous phase of the coating composition comprises a humectant, preferably selected from monoalcohols, polyols, glycols, ethers thereof, urea, modified urea and combinations thereof, more preferably selected from modified urea.

7. The method of any one of claims 1 to 6, wherein the solid phase of the coating composition further comprises a wax or a thermoplastic material, dispersed through the continuous aqueous phase; preferably
i) wherein the wax or thermoplastic material has a melting temperature ranging from 40°C to 250°C, and/or
ii) wherein the wax or thermoplastic material is selected from the group consisting of a beeswax, a carnauba wax, a candelilla wax, a montan wax, a Fischer-Tropsch wax, a polyethylene-based wax, a high density polyethylene-based wax, a polybutene-based wax, a paraffin-based wax, a polytetrafluoroethylene-based material, a polyamide-based material, a polypropylene-based wax, and combinations thereof, particularly preferably a polypropylene-based wax, a polyethylene-based wax, a polytetrafluoroethylene-based material and combinations thereof.

8. The method of any one of claims 1 to 8, wherein the coating composition comprises one or more surfactants, preferably in a concentration range from 0.05 wt.% to 5 wt.% with respect to the total weight of the coating composition.

9. The method of claim 8, wherein the one or more surfactants are selected from the group consisting of
- (poly)siloxane surfactants, more preferably polyether-modified (poly)siloxane - surfactants, in particular polyethoxylated poly(siloxane) surfactants;
- alcohol alkoxylate surfactants;
- surfactants with an HLB value of at least 7, preferably at least 10, more preferably at least 12;
- copolymers of polypropylene oxide and polyethylene oxide;
- ethoxylated fluorosurfactant;
- octylphenolethoxylate - based surfactants;
and mixtures thereof.

10. The method of any one of claims 1 to 9, wherein the coating composition is free of any color pigments.

11. The method of any one of claims 1 to 10, wherein the overcoat obtained by the overcoating has a mean thickness from 0.5 µm to 20 µm, preferably from 1 µm to 15 µm; and/or the overcoat obtained by the overcoating is such that the at least one ink printed on the area is still visible, for the entirety of the area; and/or the total amount of applied overcoating composition is from 0.5 to 50 g/m², more preferably from 1 to 30 g/m² and even more preferably from 1 to 20 g/m² and most preferably from 5 to 15 g/m².

12. The method of any one of claims 1 to 11, wherein the at least one ink comprises an aqueous ink, preferably an aqueous inkjet ink, especially a cyan (C) inkjet ink, a magenta (M) inkjet ink, a yellow (Y) inkjet ink and/or a black (K) inkjet ink.

13. The method of claim 12, wherein the aqueous ink comprises one or more film forming agents, wherein the total film forming agent concentration in the aqueous ink is from 0.1 to 30 wt.%;
wherein the one or more film forming agents fulfil at least one of the following properties:
i) a Young modulus of at least 2 GPa, and
ii) a nano hardness of at least 0.08 GPa, and/or
wherein the ink further comprises one or more emulsifiers, wherein the one or more emulsifiers are fatty acid esters of polyalkoxylated sorbitan.

14. Use of a coating composition to increase the heat abrasion resistance of a printed area of a substrate, preferably paper, a corrugated board or a liner for the production of corrugated board, wherein at least one ink has been printed on the area, preferably by inkjet printing;
wherein the coating composition has a continuous aqueous phase and a solid phase comprising inorganic nanoparticles dispersed through the continuous aqueous phase, wherein the z-average diameter of the inorganic nanoparticles is 1 nm to 100 nm, more preferably 1 nm to 50 nm, yet more preferably 1 nm to 20 nm, even more preferably 1 nm to 15, especially 1 nm to 10 nm, and wherein the mass fraction of the inorganic nanoparticles within the coating composition is more than 5%, preferably more than 10%, more preferably more than 10.5%, yet more preferably more than 11%, even more preferably more than 11.5%, yet even more preferably more than 12% or even more than 13%, especially more than 14% or more than 15%, preferably wherein the coating composition is as further defined in any one of claims 4 to 10;
preferably wherein the ink is an aqueous ink, preferably the aqueous ink as defined in claim 12 or 13.

15. A set for printing on and overcoating a substrate, comprising at least
- a container A comprising an aqueous ink, preferably the aqueous ink as defined in claim 12 or 13, and
- a container B comprising a coating composition, wherein the coating composition has a continuous aqueous phase and a solid phase comprising inorganic nanoparticles dispersed through the continuous aqueous phase, wherein the z-average diameter of the inorganic nanoparticles is 1 nm to 100 nm, more preferably 1 nm to 50 nm, yet more preferably 1 nm to 20 nm, even more preferably 1 nm to 15, especially 1 nm to 10 nm, and wherein the mass fraction of the inorganic nanoparticles within the coating composition is more than 5%, preferably more than 10%, more preferably more than 10.5%, yet more preferably more than 11%, even more preferably more than 11.5%, yet even more preferably more than 12% or even more than 13%, especially more than 14% or more than 15%, preferably wherein the coating composition is as further defined in any one of claims 4 to 10.
